# EUROPÄISCHE PATENTANMELDUNG

(11) **EP 4 012 634 A1**
(43) Veröffentlichungstag der Anmeldung: **15.06.2022**
(21) Anmeldenummer: 20213573.7
(22) Anmeldetag: 11.12.2020
(51) Int. Cl.: G06Q 10/08, G06Q 50/06, G06Q 10/06

(54) **VERFAHREN UND VORRICHTUNG ZUM VERWALTEN VON DATEN**

(71) Anmelder: TransnetBW GmbH, 70173 Stuttgart (DE)
(72) Erfinder: Weißbach, Dr. Tobias, 73066 Uhlingen (DE); Enzenhöfer, Rainer, 71116 Gärtringen (DE); Buchwald, Jean-Paul, 70565 Stuttgart (DE); Chatzianagnostou, Dimitrios, 78083 Dauchingen (DE); Kaßberger, Jochen, 70193 Stuttgart (DE); Munz, Michael, 70565 Stuttgart (DE); Turfa, Majd, 70565 Stuttgart (DE)
(74) Vertreter: DREISS Patentanwälte PartG mbB

(57) **Zusammenfassung**

Verfahren, beispielsweise computerimplementiertes Verfahren, zum Verwalten von Daten, die mit wenigstens einer Infrastrukturkomponente für ein Netz zur Übertragung und/oder Verteilung von elektrischer Energie assoziiert sind, aufweisend: Speichern der mit der wenigstens einen Infrastrukturkomponente assoziierten Daten in einem ersten Speichersystem, Speichern a) wenigstens eines Teils der mit der wenigstens einen Infrastrukturkomponente assoziierten Daten und/oder b) von basierend auf den mit der wenigstens einen Infrastrukturkomponente assoziierten Daten abgeleiteten Daten in einem zweiten Speichersystem, wobei das zweite Speichersystem auf einer Distributed-Ledger-Technologie, DLT, basiert.

## Beschreibung

Die Offenbarung betrifft ein Verfahren zum Verwalten von Daten, die mit wenigstens einer Infrastrukturkomponente für ein Netz zur Übertragung und/oder Verteilung von elektrischer Energie assoziiert sind.

Die Offenbarung betrifft ferner eine Vorrichtung zum Verwalten von Daten, die mit wenigstens einer Infrastrukturkomponente für ein Netz zur Übertragung und/oder Verteilung von elektrischer Energie assoziiert sind.

Beispielhafte Ausführungsformen beziehen sich auf ein Verfahren, beispielsweise ein computerimplementiertes Verfahren, zum Verwalten von Daten, die mit wenigstens einer Infrastrukturkomponente für ein Netz zur Übertragung ("Übertragungsnetz") und/oder Verteilung ("Verteilungsnetz") von elektrischer Energie assoziiert sind, aufweisend: Speichern der mit der wenigstens einen Infrastrukturkomponente assoziierten Daten in einem ersten Speichersystem, Speichern a) wenigstens eines Teils der mit der wenigstens einen Infrastrukturkomponente assoziierten Daten und/oder b) von basierend auf den mit der wenigstens einen Infrastrukturkomponente assoziierten Daten abgeleiteten Daten in einem zweiten Speichersystem, wobei das zweite Speichersystem auf einer Distributed-Ledger-Technologie, DLT, basiert.

Manche Ausführungsformen ermöglichen zumindest zeitweise eine sichere, beispielsweise private, Speicherung der Daten in dem ersten Speichersystem und zusätzlich eine dezentrale, manipulationssichere und beispielsweise bei weiteren Ausführungsformen öffentlich einsehbare Speicherung wenigstens des Teils der mit der wenigstens einen Infrastrukturkomponente assoziierten Daten und/oder der abgeleiteten Daten in dem zweiten Speichersystem.

Bei weiteren beispielhaften Ausführungsformen ist vorgesehen, dass das erste Speichersystem eine Datenbank aufweist, beispielsweise eine private bzw. nicht öffentlich zugängliche Datenbank.

Bei weiteren beispielhaften Ausführungsformen ist vorgesehen, dass das zweite Speichersystem wenigstens eine Blockchain aufweist.

Bei weiteren bevorzugten Ausführungsformen ist die Blockchain z.B. charakterisierbar als verkettete Liste von Datenblöcken, die z.B. unter Verwendung kryptografischer Verfahren (z.B. Bildung eines Hashwerts des jeweiligen Datenblocks) miteinander verknüpft werden, beispielsweise gemäß dem Prinzip des Merkle-Baums. Dadurch ist z.B. eine fälschungssichere Speicherung von Daten in der Blockchain möglich.

Bei weiteren beispielhaften Ausführungsformen kann die Blockchain in Form einer verteilten bzw. dezentralen Datenbank realisiert werden, wobei z.B. mehrere Netzwerkelemente ("Nodes") eines Blockchain-Netzwerks jeweils Datenblöcke der Blockchain speichern. Beispielhafte Aspekte der Blockchain-Technologie sind z.B. in der folgenden Publikation beschrieben: Nakamoto, Satoshi. (2009). Bitcoin: A Peer-to-Peer Electronic Cash System, https://bitcoin.org/bitcoin.pdf.

Bei weiteren beispielhaften Ausführungsformen ist vorgesehen, dass das zweite Speichersystem, beispielsweise alternativ oder ergänzend zu der wenigstens einen Blockchain, wenigstens einen gerichteten azyklischen Graphen (DAG), beispielsweise einen blockbasierten gerichteten azyklischen Graphen, oder einen transaktionsbasierten gerichteten azyklischen Graphen aufweist.

Bei weiteren beispielhaften Ausführungsformen ist vorgesehen, dass die wenigstens eine Infrastrukturkomponente wenigstens eines der folgenden Elemente aufweist: a) Kraftwerk, beispielsweise Kraftwerk zur Abdeckung von Spitzenlasten ("Spitzenlastkraftwerk"), b) Stromspeicher bzw. Speicher für arbeitsfähige elektrische Ladung, c) sonstige Komponente, die dazu ausgebildet ist, zumindest zeitweise Wirkleistung, z.B. in das Netz, abzugeben, d) Betriebsmittel für das Netz.

Bei weiteren beispielhaften Ausführungsformen ist vorgesehen, dass das Netz zur Übertragung und/oder Verteilung der elektrischen Energie wenigstens eines der folgenden Elemente aufweist bzw. als wenigstens eines der folgenden Elemente ausgebildet ist: a) Transportnetz bzw. Übertragungsnetz, b) Verteilnetz, c) Stadtnetz, d) Werksnetz, e) Höchstspannungsnetz, f) Hochspannungsnetz, g) Mittelspannungsnetz, h) Niederspannungsnetz. Bei weiteren beispielhaften Ausführungsformen kann das Netz auch Teil eines Netzverbunds sein bzw. einen Netzverbund aufweisen.

Bei weiteren beispielhaften Ausführungsformen ist vorgesehen, dass das Verfahren aufweist: Bilden der abgeleiteten Daten mittels einer kryptografischen Funktion und/oder einer Hashfunktion, beispielsweise einer kryptografischen Hashfunktion, beispielsweise vom Typ SHA-2 oder SHA-3.

Bei weiteren beispielhaften Ausführungsformen ist vorgesehen, dass die mit der wenigstens einen Infrastrukturkomponente assoziierten Daten wenigstens eines der folgenden Elemente aufweisen: a) Betriebsdaten der wenigstens einen Infrastrukturkomponente, beispielsweise aufweisend eine Leistung und/oder eine Kapazität der wenigstens einen Infrastrukturkomponente, beispielsweise im Falle eines Stromspeichers, b) erste Reservierungsdaten, die eine Reservierung der wenigstens einen Infrastrukturkomponente (bzw. wenigstens einer Ressource der wenigstens einen Infrastrukturkomponente), beispielsweise bezüglich eines ersten Nutzungszwecks, beispielsweise einer Netzdienlichkeit, charakterisieren, c) zweite Reservierungsdaten, die eine Reservierung der wenigstens einen Infrastrukturkomponente, beispielsweise bezüglich eines zweiten Nutzungszwecks, der z.B. von dem ersten Nutzungszweck verschieden ist, beispielsweise einer Marktdienlichkeit, charakterisieren, d) Einsatzpläne, die beispielsweise einen zukünftigen Einsatz der wenigstens einen Infrastrukturkomponente, beispielsweise für einen ersten Nutzungszweck und/oder einen zweiten Nutzungszweck, charakterisieren.

Bei weiteren beispielhaften Ausführungsformen weist das Verfahren wenigstens eines der folgenden Elemente auf: a) Lesen von Daten aus dem ersten Speichersystem und/oder dem zweiten Speichersystem, b) Bereitstellen von Daten bzw. der Daten bzw. von aus den Daten abgeleiteten Daten. Dadurch können bei weiteren beispielhaften Ausführungsformen beispielsweise einem Nutzer auf den Daten basierende Informationen zur Verfügung gestellt werden, beispielsweise in Form von Reports, die bei weiteren beispielhaften Ausführungsformen basierend auf vorgebbaren Regeln aus den Daten ableitbar bzw. erzeugbar sind.

Bei weiteren beispielhaften Ausführungsformen ist vorgesehen, dass das Verfahren aufweist: Bereitstellen einer, beispielsweise grafischen, Benutzeroberfläche, beispielsweise zur Ausgabe der mit der wenigstens einen Infrastrukturkomponente assoziierten Daten und/oder der basierend auf den mit der wenigstens einen Infrastrukturkomponente assoziierten Daten abgeleiteten Daten und/oder zur Eingabe von Daten.

Bei weiteren beispielhaften Ausführungsformen kann die z.B. grafische Benutzeroberfläche beispielsweise über ein Datennetz bereitgestellt werden, wobei das Datennetz bei weiteren beispielhaften Ausführungsformen wenigstens ein privates bzw. virtuelles privates Netzwerk /VPN) und/oder wenigstens ein öffentliches Netzwerk, z.B. das Internet bzw. das World Wide Web, aufweisen kann.

Bei weiteren beispielhaften Ausführungsformen kann eine Datenschnittstelle zur Bereitstellung der z.B. grafischen Benutzeroberfläche wenigstens eine drahtlose Datenverbindung (beispielsweise über ein zelluläres Mobilfunknetz, z.B. vom 4G- oder 5G-Typ oder ein Drahtlosnetzwerk (z.B. WLAN)) und/oder eine drahtgebundene Datenverbindung aufweisen.

Bei weiteren beispielhaften Ausführungsformen weist das Verfahren wenigstens eines der folgenden Elemente auf: a) Bereitstellen eines Smart Contract, b) Verwenden eines bzw. des Smart Contract, c) Verwalten von Berechtigungen, beispielsweise basierend auf dem Smart Contract, wobei die Berechtigungen beispielsweise charakterisieren, ob eine Partei bzw. ein Nutzer Daten in den Smart Contract schreiben darf und/oder ob einer Partei bzw. ein Nutzer mit dem Smart Contract assoziierte Daten in das zweite Speichersystem schreiben darf, und/oder wobei die Berechtigungen beispielsweise charakterisieren, welcher Nutzer in welcher Rolle bzw. in welchen Rollen und/oder mit welchem Konto bzw. welchen Konten mit einer Benutzeroberfläche und/oder dem Smart Contract und/oder dem zweiten Speichersystem interagieren darf, d) Verwalten von Rollen, beispielsweise basierend auf dem Smart Contract.

Bei weiteren beispielhaften Ausführungsformen weist das Verfahren weiter auf: Zuordnen eines Key-Value-Speichers zu dem Smart Contract.

Bei weiteren beispielhaften Ausführungsformen wird der Smart Contract z.B. in einem mit dem zweiten Speichersystem assoziierten Blockchain-Netzwerk bzw. in der Blockchain implementiert ("deployed"), z.B. gespeichert bzw. verwaltet.

Bei weiteren beispielhaften Ausführungsformen finden über den Smart Contract Interaktionen mit dem zweiten Speichersystem, z.B. der Blockchain, statt.

Bei weiteren beispielhaften Ausführungsformen sind in dem Smart Contract Rollen gespeichert bzw. definiert, die Nutzer zumindest zeitweise annehmen können.

Bei weiteren beispielhaften Ausführungsformen sind die Rollen mit zugehörigen Berechtigungsinformationen bzw. den vorstehend bereits erwähnten Berechtigungen assoziiert bzw. hinterlegt, beispielsweise in dem bei weiteren beispielhaften Ausführungsformen vorgesehenen Key-Value Speicher.

Vordefinierte Werte können bei weiteren beispielhaften Ausführungsformen jeweils, z.B. nur, von Nutzern bzw. z.B. einem jeweiligen Nutzer zugeordneten Account geschrieben werden, die einer bestimmten Rolle zugewiesen sind. D.h., über eine Zuweisung einer Rolle zu einem Nutzer bzw. dessen Konto ("Nutzerkonto") kann bei weiteren beispielhaften Ausführungsformen gesteuert werden, ob ein Nutzer Daten eines bestimmten Typs in dem ersten und/oder zweiten Speichersystem, beispielsweise in dem Smart Contract gemäß weiteren beispielhaften Ausführungsformen, speichern darf und/oder aus dem ersten und/oder zweiten Speichersystem, beispielsweise aus dem Smart Contract gemäß weiteren beispielhaften Ausführungsformen, lesen darf.

Bei weiteren beispielhaften Ausführungsformen weist das Verfahren auf: Empfangen der Betriebsdaten der wenigstens einen Infrastrukturkomponente, beispielsweise von einer der wenigstens einen Infrastrukturkomponente zugeordneten Messeinrichtung. Bei weiteren beispielhaften Ausführungsformen erfolgt das Empfangen wiederholt, beispielsweise periodisch.

Bei weiteren beispielhaften Ausführungsformen kann das Verfahren auch ein Empfangen der Betriebsdaten mehrerer Infrastrukturkomponenten für das Netz aufweisen.

Bei weiteren beispielhaften Ausführungsformen kann das Prinzip gemäß den Ausführungsformen z.B. dazu verwendet werden, die wenigstens eine Infrastrukturkomponente bzw. generell ein oder mehrere Netzbetriebsmittel einer Nutzung, beispielsweise eine parallelen Nutzung, sowohl durch wenigstens einen Netzbetreiber als auch durch wenigstens einen, z.B. mehrere Marktteilnehmer, zugänglich zu machen, beispielsweise trotz einer in manchen Staaten ggf. vorhandenen z.B. regulatorischen Trennung der Domänen bzw. Hemisphären "Netz" und "Markt", bzw. ohne diese z.B. regulatorische Trennung in Frage zu stellen.

Bei weiteren beispielhaften Ausführungsformen ist die genannte Trennung der beiden Domänen "Netz" und "Markt" beispielsweise durch die Verwendung des ersten Speichersystems und des zweiten Speichersystems gemäß den Ausführungsformen gewährleistet.

Aufgrund einer gemäß beispielhaften Ausführungsformen ermöglichten parallelen bzw. gemeinsamen Nutzung von Infrastrukturkomponenten für das Netz wie z.B. Netzbetriebsmittel, z.B. für den Markt und/oder für einen Netzbetrieb, können Infrastrukturkomponenten, deren Daten z.B. gemäß beispielhaften Ausführungsformen verwaltet werden, bei weiteren beispielhaften Ausführungsformen auch als "hybride Assets" bezeichnet werden.

Diese hybriden Assets können bei weiteren beispielhaften Ausführungsformen einen neuen Baustein in einem Energiesystem bzw. Energieversorgungssystem bilden. Beispielsweise kann bei weiteren beispielhaften Ausführungsformen über eine flexible gemeinsame Nutzung der Infrastrukturkomponenten bzw. hybriden Assets z.B. durch das Netz und den Markt eine z.B. gegenüber konventionellen Ansätzen gesteigerte Asset-Auslastung, also Auslastung der betreffenden Infrastrukturkomponenten, erzielt werden. Bei weiteren beispielhaften Ausführungsformen ist eine Netzdienlichkeit, z.B. weiterhin, führend gegenüber einer Marktdienlichkeit vorgesehen, womit z.B. ein netzseitiger Bedarf bei weiteren beispielhaften Ausführungsformen zuverlässig gedeckt werden kann.

Weitere beispielhafte Ausführungsformen beziehen sich auf das Bereitstellen eines Betriebskonzepts bzw. Betriebsverfahrens, beispielsweise für die wenigstens eine Infrastrukturkomponente und/oder das wenigstens eine Netz.

Bei weiteren beispielhaften Ausführungsformen sind eine oder mehrere der folgenden Rollen definierbar: a) "Netzbetreiber", z.B. "Übertragungsnetzbetreiber" (ÜNB), b) Betreiber der wenigstens einen Infrastrukturkomponente, z.B. Asset-Betreiber (AB), bzw. im beispielhaften Falle eines als Speicher ausgebildeten Assets z.B. "Speicherbetreiber" (SB), c) Marktteilnehmer (MT). Für die nachfolgende Beschreibung beispielhafter Ausführungsformen wird ohne Beschränkung der Allgemeinheit angenommen, dass ein Netzbetreiber beispielsweise ein Übertragungsnetzbetreiber ist, dass die wenigstens eine Infrastrukturkomponente z.B. ein Stromspeicher ist, und dass ein Betreiber der wenigstens einen Infrastrukturkomponente, Asset-Betreiber (AB), z.B. ein "Speicherbetreiber" ist. Bei weiteren beispielhaften Ausführungsformen sind auch andere der vorstehend beispielhaft genannten Typen bzw. Konstellationen denkbar.

Bei weiteren beispielhaften Ausführungsformen können für die unterschiedlichen Rollen z.B. jeweils unterschiedliche Berechtigungen definiert werden, z.B. bezüglich des Zugriffs auf in dem ersten und/oder zweiten Speichersystem gespeicherter Daten.

Bei weiteren beispielhaften Ausführungsformen weist das Betriebskonzept bzw. Betriebsverfahren wenigstens einen der nachfolgende Prozesse auf: a) Reservierungsprozess, b) Auktionsprozess, c) Planungs- und Zuteilungsprozess, d) Messdatenprozess, e) Berichtsprozess ("Reportingprozess").

Bei weiteren beispielhaften Ausführungsformen weist das Betriebskonzept bzw. Betriebsverfahren einen Ermittlungsprozess bzw. Dimensionierungsprozess auf, der bei weiteren beispielhaften Ausführungsformen z.B. dem Reservierungsprozess vorgelagert sein kann.

Bei weiteren beispielhaften Ausführungsformen kann der Ermittlungsprozess bzw. Dimensionierungsprozess zum Gegenstand haben, einen Zustand eines Assets zu einem bestimmten Zeitpunkt, z.B. nach einem vorhergehenden Tag, zu ermitteln. Beispielsweise kann mittels des Ermittlungsprozesses bzw. Dimensionierungsprozesses ermittelt werden, welche Kapazitäten bzw. welche Ressourcen eines Assets reserviert werden sollen und/oder gegebenenfalls übergeben werden, z.B. von Netz an Markt oder von Markt an Netz.

Bei weiteren beispielhaften Ausführungsformen weist der Reservierungsprozess wenigstens einen der folgenden Schritte auf: a) Reservieren, beispielsweise von Leistungsscheiben und/oder Kapazitäten der wenigstens einen Infrastrukturkomponente (z.B. Stromspeicher), die einem ersten Nutzungszweck, z.B. dem Netz, dienen, beispielsweise durch den Übertragungsnetzbetreiber, b) Ermitteln, beispielsweise von Leistungsscheiben und/oder Kapazitäten der wenigstens einen Infrastrukturkomponente (z.B. Stromspeicher), die einem zweiten (oder wenigstens einem weiteren als z.B. dem ersten Nutzungszweck dienen, z.B. dem Markt, z.B. basierend auf den für das Netz reservierten Kapazitäten und/oder Leistungs- und/oder Kapazitätsdaten der Infrastrukturkomponente (z.B. Stromspeicher), beispielsweise durch einen Betreiber der Infrastrukturkomponente (Asset-Betreiber, z.B. Speicherbetreiber), c) Freigeben der ermittelten Leistungsscheiben und/oder Kapazitäten der wenigstens einen Infrastrukturkomponente bezüglich des zweiten Nutzungszwecks (z.B. Markt), beispielsweise für eine Verteilung, beispielsweise im Wege eines Auktionsverfahrens.

Bei weiteren beispielhaften Ausführungsformen weist der Auktionsprozess wenigstens einen der folgenden Schritte auf: a) Verteilen gegen Gebot, z.B. Versteigern, der freigegebenen ermittelten Leistungsscheiben und/oder Kapazitäten der wenigstens einen Infrastrukturkomponente bezüglich des zweiten Nutzungszwecks (z.B. Markt), z.B. unter Marktteilnehmern, b) Ersteigern der freigegebenen ermittelten Leistungsscheiben und/oder Kapazitäten durch die Marktteilnehmer, wobei beispielsweise mehrere Gebote abgegeben werden können, c) Prüfen, durch die Marktteilnehmer, ob ihre Gebote akzeptiert oder abgelehnt worden sind. Bei weiteren beispielhaften Ausführungsformen können, beispielsweise nur, registrierte Marktteilnehmer an dem Auktionsprozess teilnehmen, also z.B. Marktteilnehmer, deren Identität bekannt und z.B. in dem ersten und/oder zweiten Speichersystem gespeichert ist.

Bei weiteren beispielhaften Ausführungsformen weist der Planungs- und Zuteilungsprozess wenigstens eines der folgenden Elemente auf: a) Planen von ersten Einsatzplänen, beispielsweise durch den Übertragungsnetzbetreiber, beispielsweise für die reservierten Leistungsscheiben/Kapazitäten für den ersten Nutzungszweck (z.B. Netz), b) Planen von zweiten Einsatzplänen, beispielsweise durch den wenigstens einen Marktteilnehmer, beispielsweise für die z.B. im Wege der Auktion zugewiesenen bzw. ersteigerten Leistungsscheiben/Kapazitäten, c) Einreichen der ersten Einsatzpläne bei dem Betreiber der wenigstens einen Infrastrukturkomponente (Asset-Betreiber, z.B. Speicherbetreiber), beispielsweise durch den Übertragungsnetzbetreiber, d) Einreichen der zweiten Einsatzpläne bei dem Betreiber der wenigstens einen Infrastrukturkomponente (Asset-Betreiber, z.B. Speicherbetreiber), beispielsweise durch den wenigstens einen Marktteilnehmer, e) Prüfen der eingereichten ersten und/oder zweiten Einsatzpläne, beispielsweise durch den Betreiber der wenigstens einen Infrastrukturkomponente (Asset-Betreiber, z.B. Speicherbetreiber), f) Bestätigen der eingereichten und geprüften ersten und/oder zweiten Einsatzpläne, beispielsweise basierend auf einem Ergebnis der Prüfung.

Bei weiteren beispielhaften Ausführungsformen können ein oder mehrere Einsatzpläne z.B. auch wiederholt erstellt und/oder versandt und/oder in sonstiger Weise, z.B. im Rahmen des Planungs- und Zuteilungsprozesses, verwendet werden.

Bei weiteren beispielhaften Ausführungsformen weist der Messdatenprozess wenigstens eines der folgenden Elemente auf: a) Messen, mittels einer Messeinrichtung, einer Leistung- bzw. einer Kapazität der Infrastrukturkomponente, wobei das Messen beispielsweise zumindest zeitweise erfolgt, während die Infrastrukturkomponente von dem Übertragungsnetzbetreiber und/oder von dem wenigstens einen Marktteilnehmer genutzt wird, b) Speichern der Messdaten, z.B. in dem ersten Speichersystem und/oder in dem zweiten Speichersystem, c) Vergleichen der Messdaten, z.B. der gespeicherten Messdaten, mit wenigstens einem der ersten und/oder zweiten Einsatzpläne, beispielsweise um Soll/Ist-Abweichungen festzustellen.

Bei weiteren beispielhaften Ausführungsformen weist der Berichts- bzw. Reportingprozess wenigstens eines der folgenden Element auf: a) Anzeigen von Daten, beispielsweise wenigstens eines Teils der (z.B. gespeicherten) Messdaten und/oder von bereits in wenigstens dem ersten und/oder zweiten Speichersystem gespeicherten Daten, beispielsweise in graphischer und/oder tabellarischer Form, beispielsweise mittels einer bzw. der grafischen Benutzeroberfläche, b) Berichten, beispielsweise Übermitteln, wenigstens eines Teils der (z.B. gespeicherten) Messdaten und/oder von bereits in wenigstens dem ersten und/oder zweiten Speichersystem gespeicherten Daten, z.B. an mit den verschiedenen Rollen assoziierte Einheiten bzw. Vorrichtungen bzw. Empfänger.

Bei weiteren beispielhaften Ausführungsformen lassen sich mittels des Berichtsprozesses z.B. ein oder mehrere der folgenden Informationen darstellen: a) die reservierten Leistungsscheiben (z.B. für das Netz), b) die zugewiesenen Leistungsscheiben (z.B. für Marktteilnehmer), c) die benötigte Energiemenge zum Tagesbeginn, d) der wenigstens eine Einsatzplan, e) die gemessenen Werte bzw. Messdaten.

Bei weiteren beispielhaften Ausführungsformen kann bei dem Berichts- bzw. Reportingprozess bzw. in damit generierbaren Informationen wie z.B. Berichten ein Tagesübergang bzw. ein sonstiger Übergang zwischen zwei Zeiträumen berücksichtigt werden, die für einen Betrieb bzw. eine Kapazitätsplanung berücksichtigt werden.

Bei weiteren beispielhaften Ausführungsformen können die Daten z.B. nach Zeiteinheiten tabellarisch angezeigt werden.

Bei weiteren beispielhaften Ausführungsformen wird für wenigstens eine der Rollen ein individueller Bericht ("Report") erzeugt und/oder übermittelt. Beispielsweise kann ein Bericht für den Übertragungsnetzbetreiber und/oder den Asset-Betreiber, z.B. Speicherbetreiber mehr, beispielsweise alle, verfügbaren Daten aufweisen als ein Bericht für einen Marktteilnehmer. Beispielsweise weist ein Bericht für einen bestimmten Marktteilnehmer nur den bzw. die eigenen Einsatzfahrpläne und die entsprechenden Messwerte hiervon auf.

Bei weiteren beispielhaften Ausführungsformen weist das Verfahren auf: Empfangen der ersten Reservierungsdaten, beispielsweise von einem bzw. dem Übertragungsnetzbetreiber.

Bei weiteren beispielhaften Ausführungsformen weist das Verfahren auf: Empfangen der zweiten Reservierungsdaten, beispielsweise von wenigstens einem bzw. dem wenigstens einen Marktteilnehmer.

Bei weiteren beispielhaften Ausführungsformen weist das Empfangen der Einsatzpläne auf: Empfangen des ersten und/oder zweiten Einsatzplans.

Bei weiteren beispielhaften Ausführungsformen können ein oder mehrere der vorstehend beispielhaft genannten empfangenen Daten und/oder hieraus abgeleitete Daten, beispielsweise auch Hashwerte der Daten, in dem ersten und/oder zweiten Speichersystem gespeichert werden. Beispielsweise können bei weiteren beispielhaften Ausführungsformen in dem ersten Speichersystem ein oder mehrere der vorstehend beispielhaft genannten empfangenen Daten und/oder hieraus abgeleitete Daten gespeichert werden, wobei in dem zweiten Speichersystem beispielsweise wenigstens ein Hashwert gespeichert wird, der basierend auf den vorstehend beispielhaft genannten empfangenen Daten ermittelt wird.

Bei weiteren beispielhaften Ausführungsformen ist vorgesehen, dass das Verfahren weiter aufweist: Empfangen von Eingangsdaten von wenigstens einer weiteren Einheit, Ermitteln in welchem Speichersystem (z.B. erstes Speichersystem und/oder zweites Speichersystem) die Eingangsdaten und/oder von den Eingangsdaten ableitbare Daten gespeichert werden sollen, Speichern der Eingangsdaten und/oder von den Eingangsdaten ableitbare Daten basierend auf der Ermittlung, beispielsweise in dem ersten Speichersystem und/oder in dem zweiten Speichersystem.

Weitere beispielhafte Ausführungsformen beziehen sich auf eine Vorrichtung zur Ausführung des Verfahrens gemäß den Ausführungsformen.

Bei weiteren beispielhaften Ausführungsformen weist die Vorrichtung wenigstens eine Recheneinrichtung und eine der Recheneinrichtung zugeordnete Speichereinrichtung zur zumindest zeitweisen Speicherung von Daten und/oder Computerprogrammen auf, und wenigstens eine Datenschnittstelle zum Datenaustausch mit wenigstens einer weiteren Einheit, z.B. einer Kommunikationseinrichtung eines Netzbetreibers und/oder eines Marktteilnehmers.

Weitere beispielhafte Ausführungsformen beziehen sich auf ein computerlesbares Speichermedium, umfassend Befehle, die bei der Ausführung durch einen Computer diesen veranlassen, das Verfahren gemäß den Ausführungsformen auszuführen.

Weitere beispielhafte Ausführungsformen beziehen sich auf ein Computerprogramm, umfassend Befehle, die bei der Ausführung des Programms durch einen Computer diesen veranlassen, das Verfahren gemäß den Ausführungsformen auszuführen.

Weitere beispielhafte Ausführungsformen beziehen sich auf ein Datenträgersignal, das das Computerprogramm gemäß den Ausführungsformen überträgt und/oder charakterisiert.

Weitere beispielhafte Ausführungsformen beziehen sich auf ein System aufweisend wenigstens eine Vorrichtung gemäß den Ausführungsformen und wenigstens eine Infrastrukturkomponente für ein Netz zur Übertragung und/oder Verteilung von elektrischer Energie.

Weitere beispielhafte Ausführungsformen beziehen sich auf ein Netz zur Übertragung und/oder Verteilung von elektrischer Energie, aufweisend wenigstens eine Infrastrukturkomponente für das Netz und wenigstens eine Vorrichtung gemäß den Ausführungsformen.

Weitere beispielhafte Ausführungsformen beziehen sich auf eine Verwendung des Verfahrens gemäß den Ausführungsformen und/oder der Vorrichtung gemäß den Ausführungsformen und/oder des computerlesbaren Speichermediums gemäß den Ausführungsformen und/oder des Computerprogramms gemäß den Ausführungsformen und/oder des Datenträgersignals gemäß den Ausführungsformen und/oder des Systems gemäß den Ausführungsformen und/oder des Netzes gemäß den Ausführungsformen für wenigstens eines der folgenden Elemente: a) Verwalten der mit der wenigstens einen Infrastrukturkomponente assoziierten Daten, b) Dokumentieren eines Zugriffs auf die wenigstens eine Infrastrukturkomponente, c) Steigern eines Nutzungsgrads der wenigstens einen Infrastrukturkomponente, d) Ermöglichen einer parallelen bzw. gemeinsamen Nutzung der wenigstens einen Infrastrukturkomponente, beispielsweise durch wenigstens einen Betreiber eines bzw. des Netzes und durch wenigstens einen Marktteilnehmer eines Strommarktes, e) Sicherstellen einer regulatorischen Trennung zwischen einem Betrieb des Netzes und einem mit dem Netz assoziierten Strommarkt, f) Sicherstellen einer Netzdienlichkeit der wenigstens einen Infrastrukturkomponente, beispielsweise führend gegenüber einer Marktdienlichkeit, g) Reservieren bzw. Absichern von Kapazität der wenigstens einen Infrastrukturkomponente, h) Bewahren einer Nachvollziehbarkeit der Kapazität der wenigstens einen Infrastrukturkomponente, beispielsweise für eine zwischen mehreren Parteien geteilten Nutzung der wenigstens einen Infrastrukturkomponente, beispielsweise ohne eine, beispielsweise vollständige, Offenlegung von Nutzungsdaten bzw. Nutzungswerten bezüglich der wenigstens einen Infrastrukturkomponente.

Weitere Merkmale, Anwendungsmöglichkeiten und Vorteile gemäß beispielhaften Ausführungsformen ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand gemäß beispielhaften Ausführungsformen, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Flussdiagramm gemäß beispielhaften Ausführungsformen,
- Fig. 2: schematisch ein vereinfachtes Blockdiagramm gemäß weiteren beispielhaften Ausführungsformen,
- Fig. 3: schematisch ein vereinfachtes Blockdiagramm gemäß weiteren beispielhaften Ausführungsformen,
- Fig. 4: schematisch ein vereinfachtes Flussdiagramm gemäß weiteren beispielhaften Ausführungsformen,
- Fig. 5: schematisch ein vereinfachtes Flussdiagramm gemäß weiteren beispielhaften Ausführungsformen,
- Fig. 6A: schematisch ein vereinfachtes Flussdiagramm gemäß weiteren beispielhaften Ausführungsformen,
- Fig. 6B: schematisch ein vereinfachtes Flussdiagramm gemäß weiteren beispielhaften Ausführungsformen,
- Fig. 7: schematisch ein vereinfachtes Blockdiagramm gemäß weiteren beispielhaften Ausführungsformen,
- Fig. 8: schematisch ein vereinfachtes Blockdiagramm gemäß weiteren beispielhaften Ausführungsformen,
- Fig. 9: schematisch ein vereinfachtes Ablaufdiagramm gemäß weiteren beispielhaften Ausführungsformen,
- Fig. 10: schematisch ein vereinfachtes Ablaufdiagramm gemäß weiteren beispielhaften Ausführungsformen,
- Fig. 11: schematisch ein vereinfachtes Blockdiagramm gemäß weiteren beispielhaften Ausführungsformen,
- Fig. 12: schematisch ein vereinfachtes Ablaufdiagramm gemäß weiteren beispielhaften Ausführungsformen,
- Fig. 13: schematisch ein vereinfachtes Ablaufdiagramm gemäß weiteren beispielhaften Ausführungsformen,
- Fig. 14: schematisch Aspekte von Verwendungen gemäß weiteren beispielhaften Ausführungsformen, und
- Fig. 15: schematisch ein vereinfachtes Blockdiagramm gemäß weiteren beispielhaften Ausführungsformen.

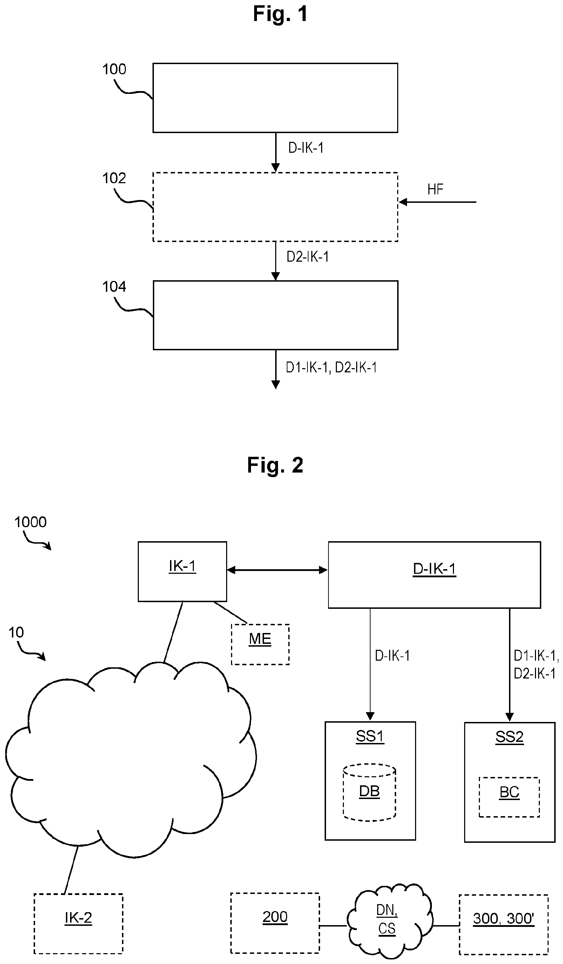

Beispielhafte Ausführungsformen, vgl. Fig. 1, 2, beziehen sich auf ein Verfahren, beispielsweise ein computerimplementiertes Verfahren, zum Verwalten von Daten D-IK-1 (Fig. 1), die mit wenigstens einer Infrastrukturkomponente IK-1 für ein Netz 10 zur Übertragung ("Übertragungsnetz") und/oder Verteilung ("Verteilungsnetz") von elektrischer Energie assoziiert sind, aufweisend: Speichern 100 (Fig. 1) der mit der wenigstens einen Infrastrukturkomponente IK-1 assoziierten Daten D-IK-1 in einem ersten Speichersystem SS1, Speichern 104 a) wenigstens eines Teils D1-IK-1 der mit der wenigstens einen Infrastrukturkomponente IK-1 assoziierten Daten D-IK-1 und/oder b) von basierend auf den mit der wenigstens einen Infrastrukturkomponente IK-1 assoziierten Daten D-IK-1 abgeleiteten Daten D2-IK-1 in einem zweiten Speichersystem SS2, wobei das zweite Speichersystem SS2 auf einer Distributed-Ledger-Technologie, DLT, basiert.

Manche Ausführungsformen ermöglichen zumindest zeitweise eine sichere, beispielsweise private, Speicherung der Daten in dem ersten Speichersystem SS1 und zusätzlich eine dezentrale, manipulationssichere und beispielsweise bei weiteren Ausführungsformen öffentlich einsehbare Speicherung wenigstens des Teils der mit der wenigstens einen Infrastrukturkomponente IK-1 assoziierten Daten und/oder der abgeleiteten Daten in dem zweiten Speichersystem SS2.

Bei weiteren beispielhaften Ausführungsformen kann das Verfahren einen optionalen Schritt 102 aufweisen, mittels dem z.B. die abgeleiteten Daten D2-IK-1 basierend auf den mit der wenigstens einen Infrastrukturkomponente IK-1 assoziierten Daten D-IK-1 ermittelt bzw. gebildet werden. Bei weiteren beispielhaften Ausführungsformen kann hierfür z.B. eine Hashfunktion HF verwendet werden, was später näher beschrieben ist.

Bei weiteren beispielhaften Ausführungsformen ist vorgesehen, dass das erste Speichersystem SS1 (Fig. 2) eine Datenbank DB aufweist, beispielsweise eine private bzw. nicht öffentlich zugängliche Datenbank DB.

Bei weiteren beispielhaften Ausführungsformen ist vorgesehen, dass das zweite Speichersystem SS2 wenigstens eine Blockchain BC aufweist.

Bei weiteren bevorzugten Ausführungsformen ist die Blockchain BC z.B. charakterisierbar als verkettete Liste von Datenblöcken, die z.B. unter Verwendung kryptografischer Verfahren (z.B. Bildung eines Hashwerts des jeweiligen Datenblocks) miteinander verknüpft werden, beispielsweise gemäß dem Prinzip des Merkle-Baums. Dadurch ist z.B. eine fälschungssichere Speicherung von Daten in der Blockchain BC möglich.

Bei weiteren beispielhaften Ausführungsformen kann die Blockchain BC in Form einer verteilten bzw. dezentralen Datenbank realisiert werden, wobei z.B. mehrere Netzwerkelemente ("Nodes") eines Blockchain-Netzwerks jeweils Datenblöcke der Blockchain BC speichern. Beispielhafte Aspekte der Blockchain-Technologie sind z.B. in der folgenden Publikation beschrieben: Nakamoto, Satoshi. (2009). Bitcoin: A Peer-to-Peer Electronic Cash System, https://bitcoin.org/bitcoin.pdf.

Bei weiteren beispielhaften Ausführungsformen ist vorgesehen, dass das zweite Speichersystem SS2, beispielsweise alternativ oder ergänzend zu der wenigstens einen Blockchain BC, wenigstens einen gerichteten azyklischen Graphen (DAG), beispielsweise einen blockbasierten gerichteten azyklischen Graphen, oder einen transaktionsbasierten gerichteten azyklischen Graphen aufweist. Diese DAG-Typen ermöglichen bei weiteren beispielhaften Ausführungsformen ebenfalls eine manipulationssichere Speicherung von Daten.

Bei weiteren beispielhaften Ausführungsformen ist vorgesehen, dass die wenigstens eine Infrastrukturkomponente IK-1 wenigstens eines der folgenden Elemente aufweist: a) Kraftwerk, beispielsweise Kraftwerk zur Abdeckung von Spitzenlasten ("Spitzenlastkraftwerk"), b) Stromspeicher bzw. Speicher für arbeitsfähige elektrische Ladung, c) sonstige Komponente, die dazu ausgebildet ist, zumindest zeitweise Wirkleistung, z.B. in das Netz 10, abzugeben, d) Betriebsmittel für das Netz.

Bei weiteren beispielhaften Ausführungsformen ist vorgesehen, dass das Netz 10 zur Übertragung und/oder Verteilung der elektrischen Energie wenigstens eines der folgenden Elemente aufweist bzw. als wenigstens eines der folgenden Elemente ausgebildet ist: a) Transportnetz bzw. Übertragungsnetz, b) Verteilnetz, c) Stadtnetz, d) Werksnetz, e) Höchstspannungsnetz, f) Hochspannungsnetz, g) Mittelspannungsnetz, h) Niederspannungsnetz.

Bei weiteren beispielhaften Ausführungsformen kann das Netz 10 auch Teil eines Netzverbunds sein bzw. einen Netzverbund aufweisen.

Bei weiteren beispielhaften Ausführungsformen können auch mehrere Infrastrukturkomponenten IK-1, IK-2, z.B. für das Netz 10, vorgesehen sein, deren Daten gemäß weiteren beispielhaften Ausführungsformen verwaltbar sind.

Bei weiteren beispielhaften Ausführungsformen, Fig. 1, ist vorgesehen, dass das Verfahren aufweist: Bilden 102 der abgeleiteten Daten D2-IK-1 mittels einer kryptografischen Funktion und/oder einer Hashfunktion HF, beispielsweise einer kryptografischen (also kollisionsresistenten) Hashfunktion, beispielsweise vom Typ SHA-2 oder SHA-3.

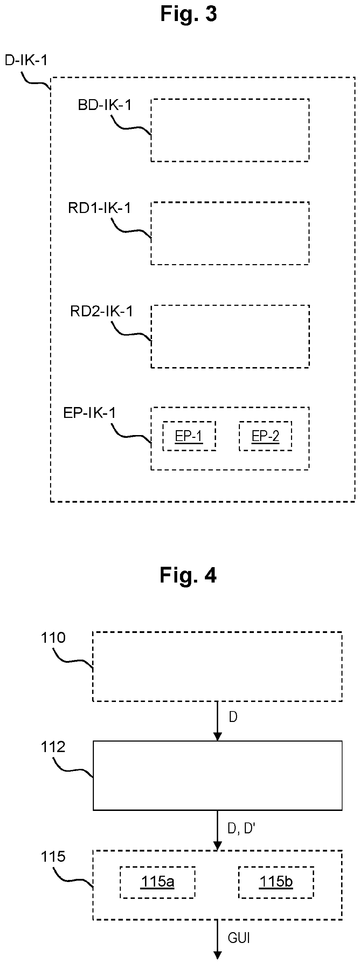

Bei weiteren beispielhaften Ausführungsformen, Fig. 3, ist vorgesehen, dass die mit der wenigstens einen Infrastrukturkomponente IK-1 assoziierten Daten D-IK-1 wenigstens eines der folgenden Elemente aufweisen: a) Betriebsdaten BD-IK-1 der wenigstens einen Infrastrukturkomponente IK-1, beispielsweise aufweisend eine Leistung und/oder eine Kapazität der wenigstens einen Infrastrukturkomponente IK-1, beispielsweise im Falle eines Stromspeichers, b) erste Reservierungsdaten RD1-IK-1, die eine Reservierung der wenigstens einen Infrastrukturkomponente IK-1 (bzw. wenigstens einer Ressource der wenigstens einen Infrastrukturkomponente IK-1), beispielsweise bezüglich eines ersten Nutzungszwecks, beispielsweise einer Netzdienlichkeit z.B. bezüglich des Netzes 10, charakterisieren, c) zweite Reservierungsdaten RD2-IK-1 , die eine Reservierung der wenigstens einen Infrastrukturkomponente IK-1, beispielsweise bezüglich eines zweiten Nutzungszwecks, der z.B. von dem ersten Nutzungszweck verschieden ist, beispielsweise einer Marktdienlichkeit, charakterisieren, d) Einsatzpläne EP-IK-1, die beispielsweise einen zukünftigen Einsatz der wenigstens einen Infrastrukturkomponente IK-1, beispielsweise für den ersten Nutzungszweck (Netz) und/oder den zweiten Nutzungszweck (Markt), charakterisieren.

Beispielsweise kann ein erster Einsatzplan EP-1 einen zukünftigen Einsatz der wenigstens einen Infrastrukturkomponente IK-1 für den ersten Nutzungszweck (Netz) charakterisieren, und ein zweiter Einsatzplan EP-2 charakterisiert einen zukünftigen Einsatz der wenigstens einen Infrastrukturkomponente IK-1 für den zweiten Nutzungszweck (Markt).

Bei weiteren beispielhaften Ausführungsformen, Fig. 4, weist das Verfahren wenigstens eines der folgenden Elemente auf: a) Lesen 110 von Daten D aus dem ersten Speichersystem SS1 und/oder aus dem zweiten Speichersystem SS2, b) Bereitstellen 112 der Daten D bzw. von aus den Daten D abgeleiteten Daten D' (z.B. Berichte, statistische Analysen, Zusammenfassungen, usw.). Dadurch können bei weiteren beispielhaften Ausführungsformen beispielsweise einem Nutzer auf den Daten D basierende Informationen zur Verfügung gestellt werden, beispielsweise in Form von Berichten bzw. Reports, die bei weiteren beispielhaften Ausführungsformen basierend auf vorgebbaren Regeln aus den Daten D ableitbar bzw. erzeugbar sind.

Bei weiteren beispielhaften Ausführungsformen ist vorgesehen, dass das Verfahren aufweist: Bereitstellen 115 einer, beispielsweise grafischen, Benutzeroberfläche GUI, beispielsweise zur Ausgabe 115a der mit der wenigstens einen Infrastrukturkomponente IK-1 assoziierten Daten D-IK-1 und/oder der basierend auf den mit der wenigstens einen Infrastrukturkomponente IK-1 assoziierten Daten D-IK-1 abgeleiteten Daten D2-IK-1 und/oder zur Eingabe 115b von Daten.

Bei weiteren beispielhaften Ausführungsformen kann die z.B. grafische Benutzeroberfläche GUI beispielsweise über ein Datennetz DN (Fig. 2) bereitgestellt werden, wobei das Datennetz DN bei weiteren beispielhaften Ausführungsformen wenigstens ein privates bzw. virtuelles privates Netzwerk (VPN) und/oder wenigstens ein öffentliches Netzwerk, z.B. das Internet bzw. das World Wide Web, aufweisen kann.

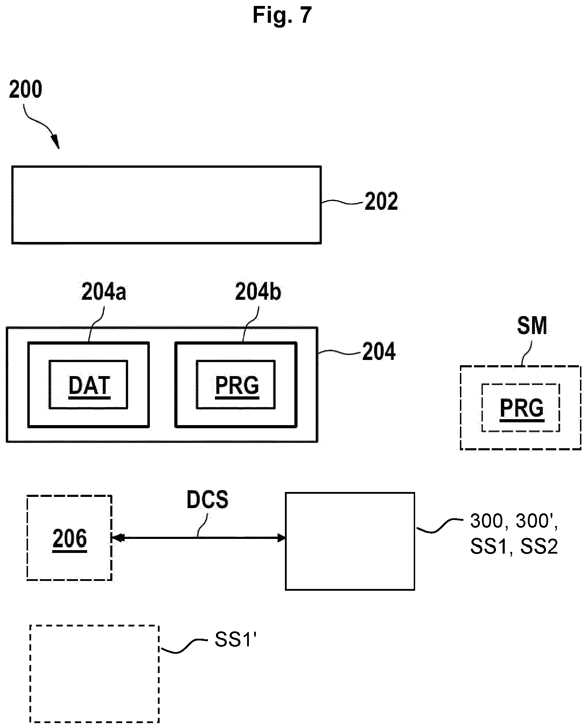

Bei weiteren beispielhaften Ausführungsformen kann eine Datenschnittstelle 206 (s. Fig. 7) zur Bereitstellung der z.B. grafischen Benutzeroberfläche GUI wenigstens eine drahtlose Datenverbindung (beispielsweise über ein zelluläres Mobilfunknetz, z.B. vom 4G- oder 5G-Typ oder ein Drahtlosnetzwerk (z.B. WLAN)) und/oder eine drahtgebundene Datenverbindung aufweisen.

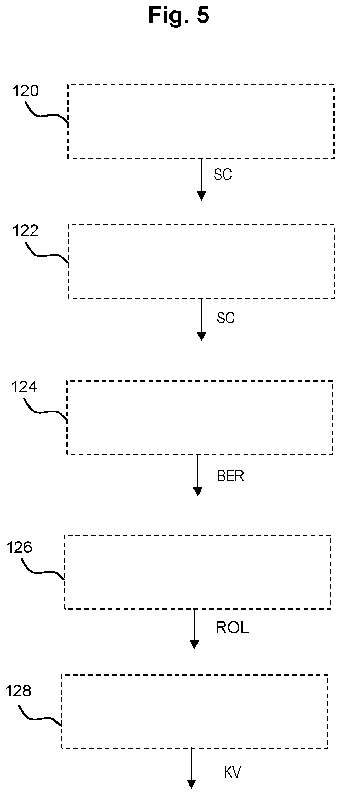

Bei weiteren beispielhaften Ausführungsformen, Fig. 5, weist das Verfahren wenigstens eines der folgenden Elemente auf: a) Bereitstellen 120 eines Smart Contract SC, b) Verwenden 122 eines bzw. des Smart Contract SC, c) Verwalten 124 von Berechtigungen BER, beispielsweise basierend auf dem Smart Contract SC, wobei die Berechtigungen BER beispielsweise charakterisieren, ob eine Partei bzw. ein Nutzer Daten in den Smart Contract SC schreiben darf und/oder ob eine Partei bzw. ein Nutzer mit dem Smart Contract SC assoziierte Daten in das zweite Speichersystem SS2 schreiben darf, und/oder wobei die Berechtigungen BER beispielsweise charakterisieren, welcher Nutzer in welcher Rolle bzw. in welchen Rollen und/oder mit welchem Konto ("Account") bzw. welchen Konten mit einer Benutzeroberfläche GUI und/oder dem Smart Contract SC und/oder dem zweiten Speichersystem SS2 interagieren darf, d) Verwalten 126 von Rollen ROL, beispielsweise basierend auf dem Smart Contract SC.

Bei weiteren beispielhaften Ausführungsformen weist das Verfahren weiter auf: Zuordnen 128 eines Key-Value-Speichers KV zu dem Smart Contract SC, beispielsweise zur Speicherung der Berechtigungen BER und/oder Rollen ROL und/oder mit den Berechtigungen BER und/oder Rollen ROL assoziierten Informationen.

Bei weiteren beispielhaften Ausführungsformen wird der Smart Contract SC z.B. in einem mit dem zweiten Speichersystem SS2 assoziierten Blockchain-Netzwerk bzw. in der Blockchain BC (Fig. 2) implementiert ("deployed"), z.B. gespeichert bzw. verwaltet.

Bei weiteren beispielhaften Ausführungsformen finden über den Smart Contract SC Interaktionen mit dem zweiten Speichersystem SS2, z.B. der Blockchain BC, statt.

Bei weiteren beispielhaften Ausführungsformen sind in dem Smart Contract SC Rollen ROL gespeichert bzw. definiert, die Nutzer zumindest zeitweise annehmen können.

Bei weiteren beispielhaften Ausführungsformen sind die Rollen ROL mit zugehörigen Berechtigungsinformationen bzw. den vorstehend bereits erwähnten Berechtigungen BER assoziiert bzw. hinterlegt, beispielsweise in dem bei weiteren beispielhaften Ausführungsformen vorgesehenen Key-Value Speicher KV.

Vordefinierte Werte können bei weiteren beispielhaften Ausführungsformen jeweils, z.B. nur, von Nutzern bzw. z.B. einem jeweiligen Nutzer zugeordneten Account geschrieben werden, die einer bestimmten Rolle zugewiesen sind. D.h., über eine Zuweisung einer Rolle ROL zu einem Nutzer bzw. dessen Konto ("Nutzerkonto", "Account") kann bei weiteren beispielhaften Ausführungsformen gesteuert werden, ob ein Nutzer Daten eines bestimmten Typs in dem ersten und/oder zweiten Speichersystem SS1, SS2, beispielsweise in dem Smart Contract SC gemäß weiteren beispielhaften Ausführungsformen, speichern darf und/oder aus dem ersten und/oder zweiten Speichersystem SS1, SS2, beispielsweise aus dem Smart Contract SC gemäß weiteren beispielhaften Ausführungsformen, lesen darf.

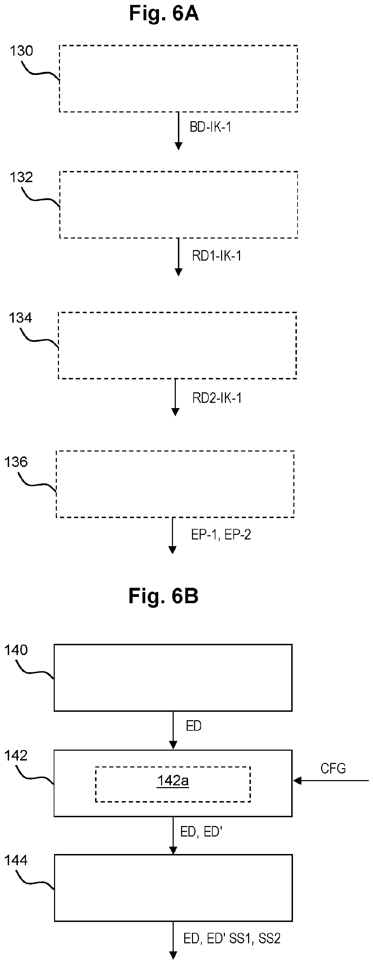

Bei weiteren beispielhaften Ausführungsformen, Fig. 6, weist das Verfahren auf: Empfangen 130 der Betriebsdaten BD-IK-1 der wenigstens einen Infrastrukturkomponente IK-1, beispielsweise von einer der wenigstens einen Infrastrukturkomponente zugeordneten Messeinrichtung ME (Fig. 2). Bei weiteren beispielhaften Ausführungsformen erfolgt das Empfangen 130 wiederholt, beispielsweise periodisch, z.B. in vorgebbaren Zeitabständen.

Bei weiteren beispielhaften Ausführungsformen kann das Verfahren auch ein Empfangen 130 der Betriebsdaten mehrerer Infrastrukturkomponenten IK-1, IK-2 für das Netz 10 aufweisen.

Bei weiteren beispielhaften Ausführungsformen kann das Prinzip gemäß den Ausführungsformen z.B. dazu verwendet werden, die wenigstens eine Infrastrukturkomponente IK-1 bzw. generell ein oder mehrere Netzbetriebsmittel einer Nutzung, beispielsweise eine parallelen Nutzung, sowohl durch wenigstens einen Netzbetreiber als auch durch wenigstens einen, z.B. mehrere Marktteilnehmer, zugänglich zu machen, beispielsweise trotz einer in manchen Staaten ggf. vorhandenen z.B. regulatorischen Trennung der Domänen bzw. Hemisphären "Netz" und "Markt", bzw. ohne diese z.B. regulatorische Trennung in Frage zu stellen.

Bei weiteren beispielhaften Ausführungsformen ist die genannte Trennung der beiden Domänen "Netz" und "Markt" beispielsweise durch die Verwendung des ersten Speichersystems SS1 (Fig. 2) und des zweiten Speichersystems SS2 gemäß den Ausführungsformen gewährleistet.

Aufgrund einer gemäß beispielhaften Ausführungsformen ermöglichten parallelen bzw. gemeinsamen Nutzung von Infrastrukturkomponenten IK-1, IK-2 für das Netz 10 wie z.B. Netzbetriebsmittel können Infrastrukturkomponenten IK-1, IK-2, deren Daten z.B. gemäß beispielhaften Ausführungsformen verwaltet werden, bei weiteren beispielhaften Ausführungsformen auch als "hybride Assets" bezeichnet werden.

Diese hybriden Assets IK-1, IK-2 können bei weiteren beispielhaften Ausführungsformen einen neuen Baustein in einem Energiesystem bzw. Energieversorgungssystem bilden.

Beispielsweise kann bei weiteren beispielhaften Ausführungsformen über eine flexible gemeinsame Nutzung der Infrastrukturkomponenten IK-1, IK-2 bzw. hybriden Assets z.B. durch das Netz 10 und den Markt eine z.B. gegenüber konventionellen Ansätzen gesteigerte Asset-Auslastung, also Auslastung der betreffenden Infrastrukturkomponenten IK-1, IK-2, erzielt werden.

Bei weiteren beispielhaften Ausführungsformen ist gleichwohl eine Netzdienlichkeit, z.B. weiterhin, führend gegenüber einer Marktdienlichkeit vorgesehen, womit z.B. ein netzseitiger Bedarf bei weiteren beispielhaften Ausführungsformen zuverlässig gedeckt werden kann.

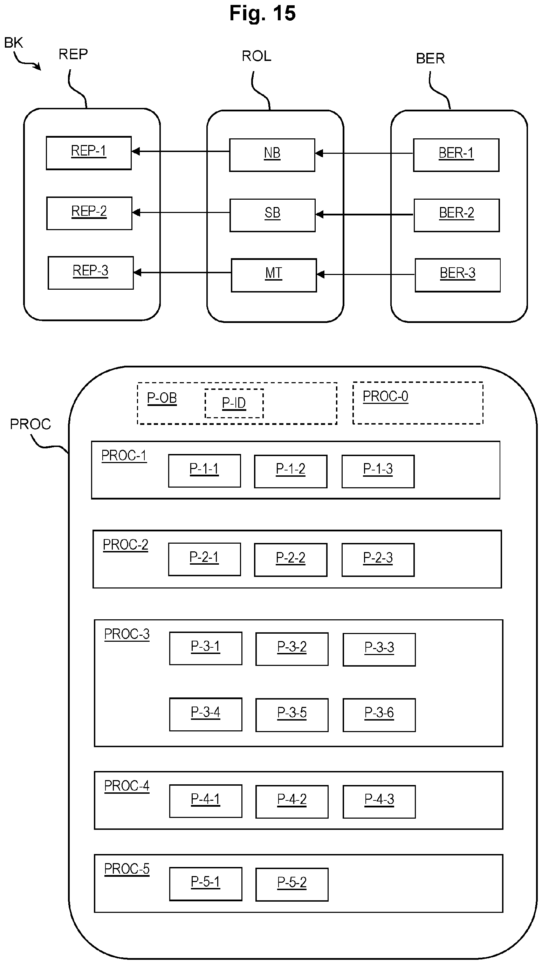

Weitere beispielhafte Ausführungsformen, Fig. 15, beziehen sich auf das Bereitstellen eines Betriebskonzepts BK bzw. Betriebsverfahrens, beispielsweise für die wenigstens eine Infrastrukturkomponente IK-1, IK-2 (Fig. 2) und/oder das wenigstens eine Netz 10.

Bei weiteren beispielhaften Ausführungsformen sind eine oder mehrere der folgenden Rollen ROL definierbar: a) "Netzbetreiber" NB, z.B. "Übertragungsnetzbetreiber (ÜNB)", b) Betreiber SB der wenigstens einen Infrastrukturkomponente, Asset-Betreiber (AB), z.B. "Speicherbetreiber (SB)", c) Marktteilnehmer MT.

Für die nachfolgende Beschreibung beispielhafter Ausführungsformen wird ohne Beschränkung der Allgemeinheit angenommen, dass ein Netzbetreiber NB beispielsweise ein Übertragungsnetzbetreiber ist, dass die wenigstens eine Infrastrukturkomponente IK-1 (Fig. 2) z.B. ein Stromspeicher ist, und dass ein Betreiber der wenigstens einen Infrastrukturkomponente (Asset-Betreiber) ein Speicherbetreiber ist. Bei weiteren beispielhaften Ausführungsformen sind auch andere der vorstehend beispielhaft genannten Typen bzw. Konstellationen denkbar.

Bei weiteren beispielhaften Ausführungsformen können für die unterschiedlichen Rollen ROL z.B. jeweils unterschiedliche Berechtigungen BER-1, BER-2, BER-3 definiert werden, z.B. bezüglich des Zugriffs auf in dem ersten und/oder zweiten Speichersystem SS1, SS2 gespeicherter Daten.

Bei weiteren beispielhaften Ausführungsformen weist das Betriebskonzept BK bzw. Betriebsverfahren wenigstens einen der nachfolgende Prozesse PROC auf: a) Reservierungsprozess PROC-1, b) Auktionsprozess PROC-2, c) Planungs- und Zuteilungsprozess PROC-3, d) Messdatenprozess PROC-4, e) Berichtsprozess ("Reportingprozess") PROC-5.

Bei weiteren beispielhaften Ausführungsformen weist das Betriebskonzept bzw. Betriebsverfahren einen Ermittlungsprozess bzw. Dimensionierungsprozess PROC-O auf, der bei weiteren beispielhaften Ausführungsformen z.B. dem Reservierungsprozess a) vorgelagert sein kann.

Bei weiteren beispielhaften Ausführungsformen kann der Ermittlungsprozess bzw. Dimensionierungsprozess PROC-O zum Gegenstand haben, einen Zustand eines Assets zu einem bestimmten Zeitpunkt, z.B. nach einem vorhergehenden Tag, zu ermitteln. Beispielsweise kann mittels des Ermittlungsprozesses bzw. Dimensionierungsprozesses ermittelt werden, welche Kapazitäten bzw. welche Ressourcen eines Assets reserviert werden sollen.

Bei weiteren beispielhaften Ausführungsformen weist der Reservierungsprozess PROC-1 wenigstens einen der folgenden Schritte auf: a) Reservieren P-1-1, beispielsweise von Leistungsscheiben und/oder Kapazitäten der wenigstens einen Infrastrukturkomponente (z.B. Stromspeicher), die einem ersten Nutzungszweck, z.B. dem Netz, dienen, beispielsweise durch den Übertragungsnetzbetreiber, b) Ermitteln P-1-2, beispielsweise von Leistungsscheiben und/oder Kapazitäten der wenigstens einen Infrastrukturkomponente (z.B. Stromspeicher), die einem zweiten (oder wenigstens einem weiteren als z.B. dem ersten Nutzungszweck dienen, z.B. dem Markt, z.B. basierend auf den für das Netz reservierten Kapazitäten und/oder Leistungs- und/oder Kapazitätsdaten der Infrastrukturkomponente (z.B. Stromspeicher), beispielsweise durch einen Betreiber der Infrastrukturkomponente (Asset-Betreiber, z.B. Speicherbetreiber), c) Freigeben P-1-3 der ermittelten Leistungsscheiben und/oder Kapazitäten der wenigstens einen Infrastrukturkomponente bezüglich des zweiten Nutzungszwecks (z.B. Markt), beispielsweise für eine Verteilung, beispielsweise im Wege eines Auktionsverfahrens.

Bei weiteren beispielhaften Ausführungsformen weist der Auktionsprozess PROC-2 wenigstens einen der folgenden Schritte auf: a) Verteilen P-2-1 gegen Gebot, z.B. Versteigern, der freigegebenen ermittelten Leistungsscheiben und/oder Kapazitäten der wenigstens einen Infrastrukturkomponente bezüglich des zweiten Nutzungszwecks (z.B. Markt), z.B. unter Marktteilnehmern, b) Ersteigern P-2-2 der freigegebenen ermittelten Leistungsscheiben und/oder Kapazitäten durch die Marktteilnehmer, wobei beispielsweise mehrere Gebote abgegeben werden können, c) Prüfen P-2-3, durch die Marktteilnehmer, ob ihre Gebote akzeptiert oder abgelehnt worden sind. Bei weiteren beispielhaften Ausführungsformen können, beispielsweise nur, registrierte Marktteilnehmer an dem Auktionsprozess teilnehmen, also z.B. Marktteilnehmer, deren Identität bekannt und z.B. in dem ersten und/oder zweiten Speichersystem gespeichert ist.

Bei weiteren beispielhaften Ausführungsformen weist der Planungs- und Zuteilungsprozess PROC-3 wenigstens eines der folgenden Elemente auf: a) Planen P-3-1 von ersten Einsatzplänen, beispielsweise durch den Übertragungsnetzbetreiber, beispielsweise für die reservierten Leistungsscheiben/Kapazitäten für den ersten Nutzungszweck (z.B. Netz), b) Planen P-3-2 von zweiten Einsatzplänen, beispielsweise durch den wenigstens einen Marktteilnehmer, beispielsweise für die z.B. im Wege der Auktion zugewiesenen bzw. ersteigerten Leistungsscheiben/Kapazitäten, c) Einreichen P-3-3 der ersten Einsatzpläne bei dem Betreiber der wenigstens einen Infrastrukturkomponente (Asset-Betreiber, z.B. Speicherbetreiber), beispielsweise durch den Übertragungsnetzbetreiber, d) Einreichen P-3-4 der zweiten Einsatzpläne bei dem Betreiber der wenigstens einen Infrastrukturkomponente (Asset-Betreiber, z.B. Speicherbetreiber), beispielsweise durch den wenigstens einen Marktteilnehmer, e) Prüfen P-3-5 der eingereichten ersten und/oder zweiten Einsatzpläne, beispielsweise durch den Betreiber der wenigstens einen Infrastrukturkomponente (Asset-Betreiber, z.B. Speicherbetreiber), f) Bestätigen P-3-6 der eingereichten und geprüften ersten und/oder zweiten Einsatzpläne, beispielsweise basierend auf einem Ergebnis der Prüfung.

Bei weiteren beispielhaften Ausführungsformen weist der Messdatenprozess PROC-4 wenigstens eines der folgenden Elemente auf: a) Messen P-4-1, mittels einer Messeinrichtung, einer Leistung- bzw. einer Kapazität der Infrastrukturkomponente, wobei das Messen beispielsweise zumindest zeitweise erfolgt, während die Infrastrukturkomponente von dem Übertragungsnetzbetreiber und/oder von dem wenigstens einen Marktteilnehmer genutzt wird, b) Speichern P-4-2 der Messdaten, z.B. in dem ersten Speichersystem SS1 und/oder in dem zweiten Speichersystem SS2, c) Vergleichen P-4-3 der Messdaten, z.B. der gespeicherten Messdaten, mit wenigstens einem der ersten und/oder zweiten Einsatzpläne, beispielsweise um Soll/Ist-Abweichungen festzustellen.

Bei weiteren beispielhaften Ausführungsformen weist der Berichts- bzw. Reportingprozess PROC-5 wenigstens eines der folgenden Element auf: a) Anzeigen P-5-1 von Daten, beispielsweise wenigstens eines Teils der (z.B. gespeicherten) Messdaten und/oder von bereits in wenigstens dem ersten und/oder zweiten Speichersystem gespeicherten Daten, beispielsweise in graphischer und/oder tabellarischer Form, beispielsweise mittels einer bzw. der grafischen Benutzeroberfläche, b) Berichten P-5-2, beispielsweise Übermitteln als Bericht REP, wenigstens eines Teils der (z.B. gespeicherten) Messdaten und/oder von bereits in wenigstens dem ersten und/oder zweiten Speichersystem gespeicherten Daten, z.B. an mit den verschiedenen Rollen assoziierte Einheiten bzw. Vorrichtungen bzw. Empfänger.

Bei weiteren beispielhaften Ausführungsformen lassen sich mittels des Berichtsprozesses PROC-5 z.B. ein oder mehrere der folgenden Informationen darstellen: a) die reservierten Leistungsscheiben (z.B. für das Netz), b) die zugewiesenen Leistungsscheiben (z.B. für Marktteilnehmer), c) die benötigte Energiemenge zum Tagesbeginn, d) der wenigstens eine Einsatzplan, e) die gemessenen Werte bzw. Messdaten.

Bei weiteren beispielhaften Ausführungsformen können die Daten z.B. nach Zeiteinheiten tabellarisch angezeigt werden.

Bei weiteren beispielhaften Ausführungsformen wird für wenigstens eine der Rollen ROL ein individueller Bericht ("Report") REP-1, REP-2, REP-3 erzeugt und/oder übermittelt. Beispielsweise kann ein Bericht für den Übertragungsnetzbetreiber NB und/oder den Asset-Betreiber, z.B. Speicherbetreiber SB mehr, beispielsweise alle, verfügbaren Daten aufweisen als ein Bericht für einen Marktteilnehmer MT. Beispielsweise weist ein Bericht für einen bestimmten Marktteilnehmer MT nur den bzw. die eigenen Einsatzfahrpläne und die entsprechenden Messwerte hiervon auf.

Bei weiteren beispielhaften Ausführungsformen, Fig. 6, weist das Verfahren auf: Empfangen 132 der ersten Reservierungsdaten RD1-IK-1, beispielsweise von einem bzw. dem Übertragungsnetzbetreiber NB (Fig. 15).

Bei weiteren beispielhaften Ausführungsformen weist das Verfahren auf: Empfangen 134 (Fig. 6) der zweiten Reservierungsdaten RD2-IK-1, beispielsweise von dem wenigstens einen Marktteilnehmer MT (Fig. 15).

Bei weiteren beispielhaften Ausführungsformen weist das Verfahren auf: Empfangen 136 des ersten und/oder zweiten Einsatzplans EP-1, EP-2.

Bei weiteren beispielhaften Ausführungsformen können ein oder mehrere der vorstehend beispielhaft genannten empfangenen Daten BD-IK-1, RD1-IK-1, RD2-IK-1, EP-1, EP-2 und/oder hieraus abgeleitete Daten, beispielsweise Hashwerte der Daten, in dem ersten und/oder zweiten Speichersystem SS1, SS2 gespeichert werden.

Beispielsweise können bei weiteren beispielhaften Ausführungsformen in dem ersten Speichersystem SS1 ein oder mehrere der vorstehend beispielhaft genannten empfangenen Daten und/oder hieraus abgeleitete Daten gespeichert werden, wobei in dem zweiten Speichersystem SS2 beispielsweise wenigstens ein Hashwert gespeichert wird, der basierend auf den vorstehend beispielhaft genannten empfangenen Daten ermittelt wird. Dadurch sind die entsprechenden Daten u.a. manipulationssicher speicherbar, beispielsweise ohne dass z.B. alle dieser Daten öffentlich einsehbar sind, z.B. im Falle einer öffentlichen Blockchain BC. Vielmehr kann die (z.B. öffentliche) Blockchain BC des zweiten Speichersystems SS2 bei weiteren beispielhaften Ausführungsformen ein oder mehrere Hashwerte der betreffenden Daten speichern, was z.B. eine Überprüfung der Daten ermöglicht, und gleichzeitig kann aus den Hashwerten nicht bereits auf den Inhalt der Daten geschlossen werden, der bei weiteren beispielhaften Ausführungsformen beispielsweise in einer z.B. privaten Datenbank DB des ersten Speichersystems SS1 gespeichert ist.

Bei weiteren beispielhaften Ausführungsformen, Fig. 6B, ist vorgesehen, dass das Verfahren weiter aufweist: Empfangen 140 von Eingangsdaten ED von wenigstens einer weiteren Einheit 300 (Fig. 2), Ermitteln 142 (Fig. 6B) in welchem Speichersystem (z.B. erstes Speichersystem SS1 und/oder zweites Speichersystem SS2) die Eingangsdaten ED und/oder von den Eingangsdaten ED ableitbare Daten ED' gespeichert werden sollen, Speichern 144 der Eingangsdaten ED und/oder von den Eingangsdaten ED ableitbaren Daten ED' basierend auf der Ermittlung 142, beispielsweise in dem ersten Speichersystem SS1 und/oder in dem zweiten Speichersystem SS2.

Optional kann der Block 142 bei weiteren beispielhaften Ausführungsformen auch ein Ableiten 142a der ableitbaren Daten ED' basierend auf den Eingangsdaten ED aufweisen.

Bei weiteren beispielhaften Ausführungsformen kann das Ermitteln 142 beispielsweise basierend auf Konfigurationsdaten CFG erfolgen, die beispielsweise durch wenigstens einen Nutzer bzw. Betreiber bzw. durch wenigstens eine der Rollen ROL vorgebbar sind.

Bei weiteren beispielhaften Ausführungsformen ist die wenigstens eine weitere Einheit 300 beispielsweise mit wenigstens einer Rolle ROL (Fig. 15) des vorstehend beispielhaft unter Bezugnahme auf Fig. 15 beschriebenen Betriebskonzepts BK assoziiert, z.B. mit dem Netzbetreiber NB und/oder wenigstens einem der Marktteilnehmer MT.

Bei weiteren beispielhaften Ausführungsformen kann beispielsweise auch wenigstens einen Betreiber der wenigstens einen Infrastrukturkomponente IK-1, Asset-Betreiber, beispielsweise einem Speicherbetreiber SB, eine vergleichbare weitere Einheit 300' zugeordnet sein.

Weitere beispielhafte Ausführungsformen, Fig. 7, beziehen sich auf eine Vorrichtung 200 zur Ausführung des Verfahrens gemäß den Ausführungsformen.

Bei weiteren beispielhaften Ausführungsformen weist die Vorrichtung 200 wenigstens eine Recheneinrichtung ("Computer") 202 und eine der Recheneinrichtung 202 zugeordnete Speichereinrichtung 204 zur zumindest zeitweisen Speicherung von Daten DAT und/oder Computerprogrammen PRG auf, und wenigstens eine Datenschnittstelle 206 zum Datenaustausch mit wenigstens einer weiteren Einheit 300, 300', z.B. einer Einrichtung bzw. Kommunikationseinrichtung eines Netzbetreibers NB und/oder eines Marktteilnehmers MT und/oder eines Betreibers SB der wenigstens einen Infrastrukturkomponente IK-1 und/oder wenigstens einem der Speichersysteme SS1, SS2.

Bei weiteren beispielhaften Ausführungsformen kann wenigstens eine Komponente SS1' des ersten Speichersystems SS1 (Fig. 2), beispielsweise wenigstens ein Teil der Datenbank DB, in der Vorrichtung 200 integriert sein.

Bei weiteren beispielhaften Ausführungsformen können die Daten DAT zumindest zeitweise wenigstens einen Typ D-IK-1, D1-IK-1, D2-IK-1, BD-IK-1, RD1-IK-1, RD2-IK-1, EP-IK-1, EP-1, EP-2, D, D', ED, ED' der vorstehend beispielhaft beschriebenen Daten bzw. sonstige, beispielsweise mit den Rollen ROL und/oder den Berechtigungen BER und/oder den Berichten REP und/oder dem Betriebskonzept BK assoziierte Daten aufweisen, und/oder hieraus abgeleitete Daten und/oder Ergebnisse bzw. Zwischenergebnisse kryptografischer Algorithmen HF wie z.B. Hashwerte.

Bei weiteren beispielhaften Ausführungsformen weist die Speichereinrichtung 204 einen flüchtigen Speicher 204a (z.B. Arbeitsspeicher (RAM)) auf, und/oder einen nichtflüchtigen Speicher 204b (z.B. Flash-EEPROM), oder eine Kombination hieraus oder mit anderen, nicht explizit genannten Speichertypen.

Bei weiteren beispielhaften Ausführungsformen kann die wenigstens eine weitere Einheit 300, 300' beispielsweise eine zu der Konfiguration 200 gemäß Fig. 7 vergleichbare Konfiguration aufweisen.

Bei weiteren beispielhaften Ausführungsformen kann eine zu der beispielhaften Konfiguration 200 gemäß Fig. 7 vergleichbare oder identische Funktionalität beispielsweise auch in wenigstens einer Vorrichtung des Netzbetreibers NB und/oder wenigstens eines Marktteilnehmers MT und/oder wenigstens eines Betreibers SB der wenigstens einen Infrastrukturkomponente IK-1 vorgesehen sein.

Bei weiteren beispielhaften Ausführungsformen kann eine zu der beispielhaften Konfiguration 200 gemäß Fig. 7 vergleichbare Funktionalität auch in einem verteilten System, beispielsweise Cloud-System, das beispielsweise mit dem beispielhaften Datennetz DN gemäß Fig. 2 im Datenverbindung steht und/oder darin implementiert ist, realisiert sein.

Weitere beispielhafte Ausführungsformen, Fig. 7, beziehen sich auf ein computerlesbares Speichermedium SM, umfassend Befehle PRG, die bei der Ausführung durch einen Computer 202 diesen veranlassen, das Verfahren gemäß den Ausführungsformen auszuführen.

Weitere beispielhafte Ausführungsformen beziehen sich auf ein Computerprogramm PRG, umfassend Befehle, die bei der Ausführung des Programms durch einen Computer 202 diesen veranlassen, das Verfahren gemäß den Ausführungsformen auszuführen.

Weitere beispielhafte Ausführungsformen beziehen sich auf ein Datenträgersignal DCS, das das Computerprogramm PRG gemäß den Ausführungsformen überträgt und/oder charakterisiert. Das Datenträgersignal DCS ist bei weiteren beispielhaften Ausführungsformen beispielsweise über die Datenschnittstelle 206 übertragbar.

Weitere beispielhafte Ausführungsformen beziehen sich auf ein System 1000, Fig. 2, aufweisend wenigstens eine Vorrichtung 200 gemäß den Ausführungsformen und wenigstens eine Infrastrukturkomponente IK-1, IK-2 für ein Netz 10 zur Übertragung und/oder Verteilung von elektrischer Energie.

Weitere beispielhafte Ausführungsformen beziehen sich auf ein Netz 10 zur Übertragung und/oder Verteilung von elektrischer Energie, aufweisend wenigstens eine Infrastrukturkomponente IK-1, IK-2 für das Netz 10 und wenigstens eine Vorrichtung 200 gemäß den Ausführungsformen.

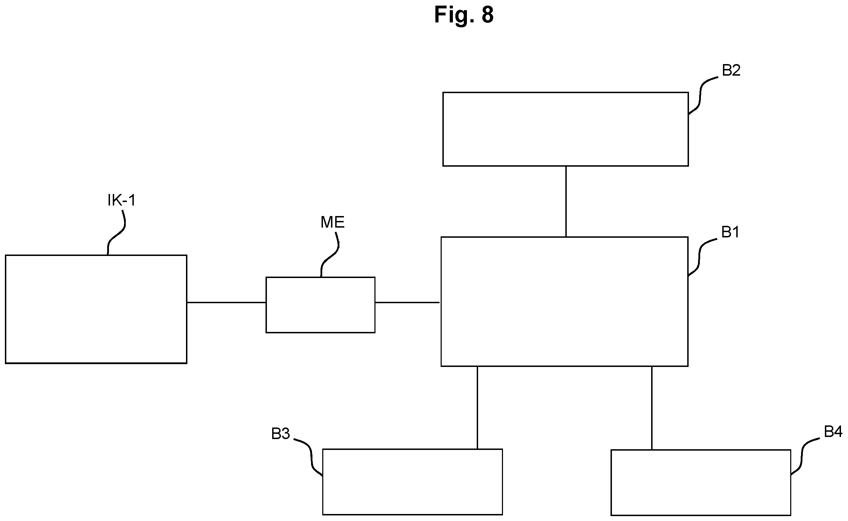

Fig. 8 zeigt schematisch ein vereinfachtes Blockdiagramm gemäß weiteren beispielhaften Ausführungsformen. Block B1 symbolisiert eine Backend-Einrichtung, die bei weiteren beispielhaften Ausführungsformen beispielsweise zumindest zeitweise wenigstens einen Teil der Funktionalität der vorstehend beispielhaft unter Bezugnahme auf Figur 7 beschriebenen Konfiguration 200 aufweist bzw. die zumindest zeitweise zur Ausführung von zumindest manchen Aspekten des Verfahrens gemäß den Ausführungsformen ausgebildet ist.

Bei weiteren beispielhaften Ausführungsformen, die zumindest teilweise bzw. zumindest zeitweise das vorstehend beispielhaft unter Bezugnahme auf Fig. 15 beschriebene Betriebskonzept BK verwenden, kann die Backend-Einrichtung BK beispielsweise wenigstens einen der folgenden Prozesse bzw. zumindest manche Aspekte der folgenden Prozesse verwalten bzw. ausführen und/oder mit den genannten Prozessen assoziierte Unterstützungsprozesse: a) Auktionsprozess PROC-2, b) Planungs- und Zuteilungsprozess PROC-3, c) Messdatenprozess PROC-4, d) Berichtsprozess ("Reportingprozess") PROC-5.

Bei weiteren beispielhaften Ausführungsformen kann die Backend-Einrichtung B1 beispielsweise ein Framework für Web-Applikationen aufweisen.

Block B2 symbolisiert eine Frontend-Einrichtung, die bei weiteren beispielhaften Ausführungsformen beispielsweise zumindest zeitweise wenigstens einen Teil der Funktionalität der vorstehend beispielhaft unter Bezugnahme auf Figur 7 beschriebenen Konfiguration 200 aufweist bzw. die zumindest zeitweise zur Ausführung von zumindest manchen Aspekten des Verfahrens gemäß den Ausführungsformen ausgebildet ist.

Bei weiteren beispielhaften Ausführungsformen, die zumindest teilweise bzw. zumindest zeitweise das vorstehend beispielhaft unter Bezugnahme auf Fig. 15 beschriebene Betriebskonzept BK verwenden, kann die Frontend-Einrichtung B2 beispielsweise wenigstens einen der folgenden Prozesse bzw. zumindest manche Aspekte der folgenden Prozesse verwalten bzw. ausführen und/oder mit den genannten Prozessen assoziierte Unterstützungsprozesse: Verwaltung der Rollen ROL (Fig. 15) und/oder Berechtigungen BER.

Der Block ME symbolisiert eine Messeinrichtung, die beispielsweise zur Erfassung von Daten D-IK-1, die mit der wenigstens einen Infrastrukturkomponente IK-1 für das Netz 10 assoziiert sind.

Der Block B3 symbolisiert eine Datenbank, wie sie beispielsweise das erste Speichersystem SS1 charakterisiert bzw. aufweisen kann, und der Block B4 symbolisiert eine Blockchain, wie sie beispielsweise Teil des zweiten Speichersystems SS2 sein kann.

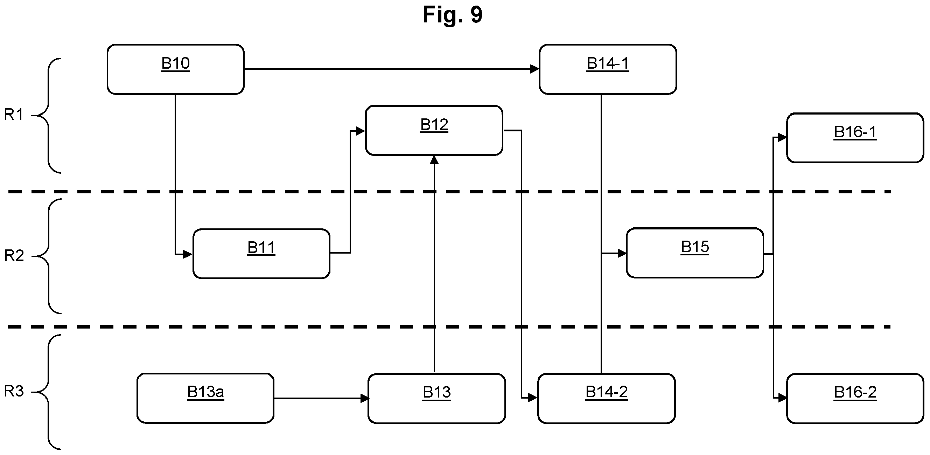

Fig. 9 zeigt schematisch ein vereinfachtes Ablaufdiagramm gemäß weiteren beispielhaften Ausführungsformen. Der erste Bereich R1 ist beispielsweise einer Sphäre eines Netzbetreibers NB, beispielsweise einem Übertragungsnetzbetreiber, zugeordnet, der zweite Bereich R2 ist beispielsweise einer Sphäre eines Betreibers SB der wenigstens einen Infrastrukturkomponente IK-1 (Asset-Betreiber), beispielsweise einem Speicherbetreiber, zugeordnet, und der dritte Bereich R3 ist beispielsweise einer Sphäre wenigstens eines Marktteilnehmers MT zugeordnet.

Block B10 symbolisiert beispielhaft eine Ermittlung einer für das Netz 10 benötigten Kapazität der wenigstens einen Infrastrukturkomponente IK-1, vorliegend beispielsweise und ohne Beschränkung der Allgemeinheit eines Stromspeichers, Block B11 symbolisiert beispielhaft eine Ermittlung einer beispielsweise für den Markt verbleibenden Kapazität des Stromspeichers IK-1, beispielsweise basierend auf der durch den Übertragungsnetzbetreiber NB ermittelten für das Netz 10 benötigten Kapazität, Block B12 symbolisiert beispielhaft das Ausführen einer Verteilung der für den Markt verfügbaren verbleibenden Kapazität des Stromspeichers, wie sie beispielhaft in Block B11 ermittelt worden ist, beispielsweise im Wege einer Auktion, beispielsweise durch den Übertragungsnetzbetreiber NB.

Block B13 symbolisiert beispielhaft eine Teilnahme an der Verteilung bzw. Auktion B12 durch den wenigstens einen Marktteilnehmer MT, wobei bei weiteren beispielhaften Ausführungsformen eine Registrierung B13a der Marktteilnehmer MT erforderlich sein kann für eine Teilnahme an der Auktion B12.

Block B14-1 symbolisiert beispielhaft eine Nutzung der zuvor ermittelten für das Netz 10 benötigten Kapazität durch den Übertragungsnetzbetreiber NB, beispielsweise zur Sicherstellung einer Netzstabilität, und Block B14-2 symbolisiert beispielhaft eine Nutzung einer gegebenenfalls bei der Auktion B12 ersteigerten Kapazität des Stromspeichers seitens des wenigstens einen Marktteilnehmers MT.

Block B15 symbolisiert beispielhaft eine Meldung ("Dispatch") des Asset-Betreibers, z.B. Speicherbetreibers SB, die beispielsweise die wenigstens eine Nutzung B14-1, B14-2 beschreibt bzw. charakterisiert.

Block B15-1 symbolisiert beispielhaft das Erstellen von Berichten REP-1 und/oder einer Abrechnung bezüglich der Nutzung B14-1 des Stromspeichers durch den Übertragungsnetzbetreiber NB, beispielsweise basierend auf der Meldung B15, und Block B15-2 symbolisiert beispielhaft das Erstellen von Berichten REP-3 und/oder einer Abrechnung bezüglich der Nutzung B14-2 des Stromspeichers durch den wenigstens einen Marktteilnehmer MT.

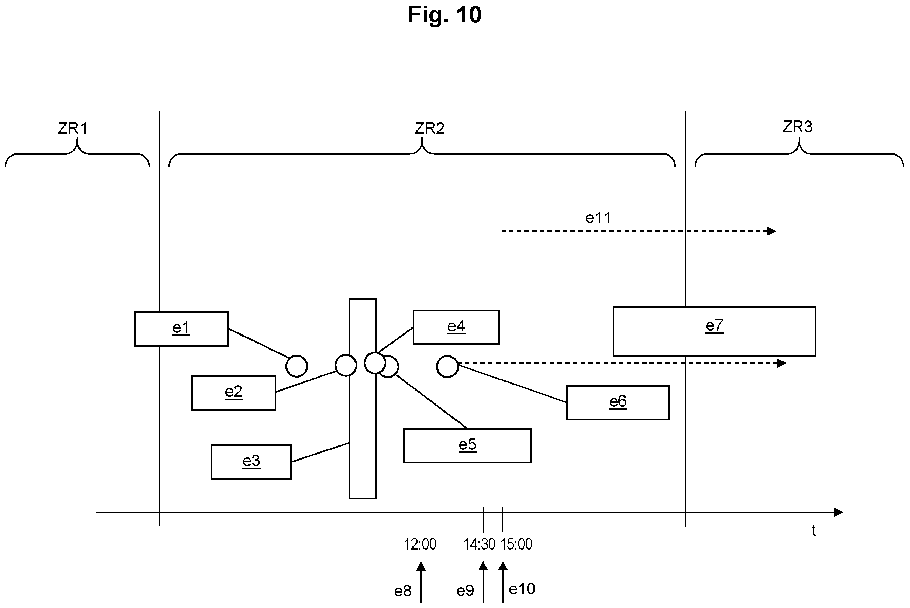

Fig. 10 zeigt schematisch ein vereinfachtes Ablaufdiagramm gemäß weiteren beispielhaften Ausführungsformen. Abgebildet sind beispielhaft drei Zeitbereiche ZR1, ZR2, ZR3 entlang einer Zeitachse t, wobei der dritte Zeitbereich ZR3 beispielsweise mit einem Stichtag assoziiert ist, wobei der zweite Zeitbereich ZR2 beispielsweise mit einem Vortag des Stichtags assoziiert ist, und wobei der erste Zeitbereich ZR1 mit einem Tag assoziiert ist, der zwei Tage vor dem Stichtag liegt.

Element e1 symbolisiert beispielhaft eine Meldung eines Kapazitätsbedarfs bezüglich des Stromspeichers IK-1 für den Stichtag ZR3 durch den Übertragungsnetzbetreiber NB, wobei bei weiteren beispielhaften Ausführungsformen die Meldung e1 beispielsweise bis zu einem gewissen Zeitpunkt, beispielsweise 10:00 Uhr morgens des Vortags ZR2, gemacht werden kann.

Element e2 symbolisiert beispielhaft eine Bekanntgabe, beispielsweise durch den Asset-Betreiber, z.B. Speicherbetreiber SB, einer beispielsweise für den Markt verfügbaren Kapazität bezüglich des Stromspeichers IK-1, wie sie beispielsweise basierend auf der Meldung e1 des Übertragungsnetzbetreibers NB ermittelbar ist. Die Bekanntgabe e2 beispielhaft etwa um 10:30 Uhr des Vortags ZR2 erfolgen.

Element e3 symbolisiert beispielhaft einen Zeitbereich, beispielsweise zwischen 10:30 Uhr des Vortags und 11:00 Uhr des Vortags, in dem der wenigstens eine Marktteilnehmer MT Gebote abgeben kann für beispielsweise zu ersteigernde Kapazitätsanteile bezüglich des Stromspeichers IK-1, wie sie als für den Markt verfügbar bekannt gegeben worden sind, vergleiche das Element e2.

Element e4 symbolisiert beispielhaft die Durchführung einer Auktion bezüglich der für den Markt verfügbaren Kapazität des Stromspeichers IK-1 für den Stichtag ZR3, beispielsweise um 11:00 Uhr an dem Vortag. Kurz darauf, beispielsweise um 11:05 Uhr des Vortags, liegen die Auktionsergebnisse für den Stichtag vor, vergleiche Element e5.

Element e6 symbolisiert beispielhaft eine erste Einsatzplan Abgabe des Marktes bzw. des wenigstens einen Marktteilnehmer an den Asset-Betreiber, z.B. Speicherbetreiber SB, Beispiel zweite basierend auf einer während der Auktion e4 ersteigerten Kapazität des Stromspeichers IK-1. Bei weiteren beispielhaften Ausführungsformen kann die Abgabe e6 des Einsatzplans zum Beispiel um etwa 13:00 Uhr des Vortags erfolgen.

Bei weiteren beispielhaften Ausführungsformen ist eine späteren Anpassung des Einsatzplans, vergleiche das Element e7, beispielsweise jederzeit, beispielsweise mit einer vorgebbaren Vorlaufzeit von beispielsweise 15 Minuten, möglich.

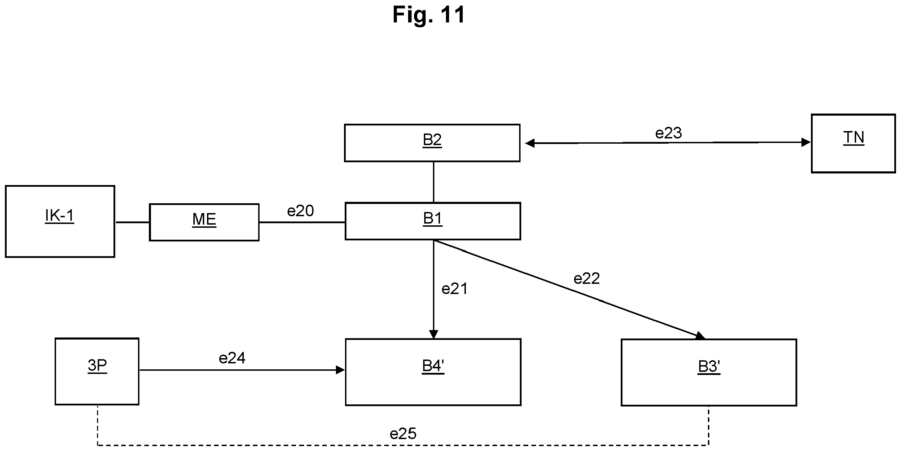

Fig. 11 zeigt schematisch ein vereinfachtes Blockdiagramm gemäß weiteren beispielhaften Ausführungsformen, wobei die Komponenten B1, B2, ME, IK-1 beispielsweise den bereits vorstehend beispielhaft unter Bezugnahme auf Fig. 11 beschriebenen Komponenten B1, B2, ME, IK-1 entsprechen. Block B3' symbolisiert beispielhaft eine Datenbank, beispielsweise private Datenbank, wie sie beispielsweise Teil des ersten Speichersystems SS1 (Fig. 2) sein kann. Block B4' symbolisiert beispielhaft eine Blockchain, wie sie beispielsweise Teil des zweiten Speichersystems SS2 sein kann. Das Bezugszeichen TN symbolisiert Teilnehmer, beispielsweise wenigstens einen Marktteilnehmer MT, die beispielsweise zumindest zeitweise ein Betriebskonzept BK (Fig. 15) gemäß weiteren beispielhaften Ausführungsformen bzw. wenigstens manche Aspekte hiervon verwenden. Das Bezugszeichen 3P symbolisiert beispielhaft dritte Parteien bzw. generell eine Öffentlichkeit.

Das Element e20 symbolisiert beispielhaft eine Übermittlung von Daten durch die Messeinrichtung ME an die Backend-Einrichtung B1, das Element e21 symbolisiert beispielhaft einen Datenaustausch (z.B. Schreiben und/oder Lesen von Daten) zwischen der Backend-Einrichtung B1 und der Blockchain B4', das Element e22 symbolisiert beispielhaft einen Datenaustausch (z.B. Schreiben und/oder Lesen von Daten) zwischen der Backend-Einrichtung B1 und der Datenbank B3', das Element e23 symbolisiert beispielhaft einen Datenaustausch (z.B. Schreiben und/oder Lesen von Daten) zwischen der Frontend-Einrichtung B2 und den Teilnehmern TN, das Element e24 symbolisiert beispielhaft ein Lesen von Daten (beispielsweise von Hashwerten) seitens der Öffentlichkeit bzw. dritten Parteien 3P, beispielsweise aus der z.B. öffentlichen Blockchain B4'.

Das Element e25 symbolisiert beispielhaft eine Überprüfung einer Korrektheit bzw. Gültigkeit von gemäß beispielhaften Ausführungsformen in dem ersten Speichersystem und/oder in dem zweiten Speichersystem bzw. in den Komponenten B3', B4' gespeicherten Daten durch die Öffentlichkeit bzw. dritten Parteien 3P, die bei weiteren beispielhaften Ausführungsformen beispielsweise dann möglich ist, wenn die in der Datenbank B3' gespeicherten Daten veröffentlicht werden können.

Bei weiteren beispielhaften Ausführungsformen können beispielsweise öffentlich einsehbare Daten von beispielsweise geringer Größe auch direkt in der Blockchain B4' gespeichert werden. Bei weiteren beispielhaften Ausführungsformen können beispielsweise sensible, also beispielsweise nicht öffentlich einsehbare, Daten und/oder umfangreiche Daten beispielsweise in der Datenbank B3' gespeichert werden, und zusätzlich kann beispielsweise ein Hashwert dieser Daten in der Blockchain B4' gespeichert werden.

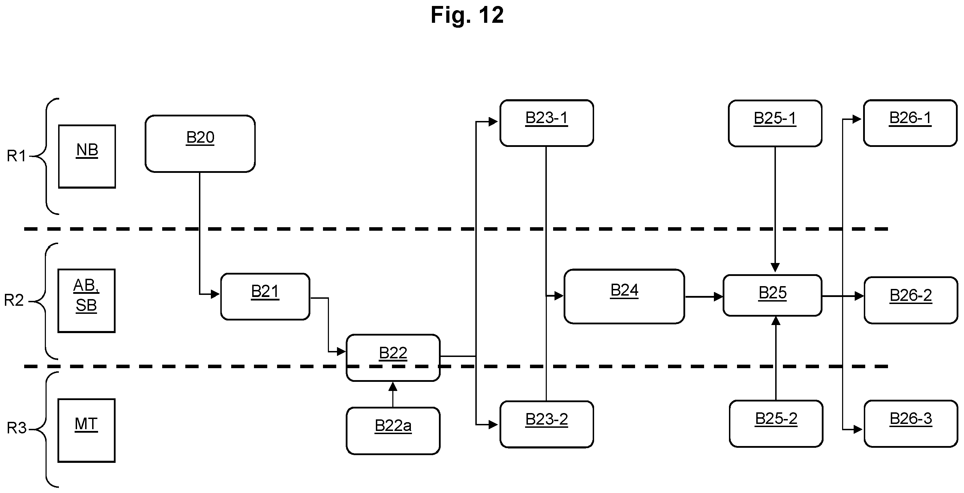

Fig. 12 zeigt schematisch ein vereinfachtes Ablaufdiagramm gemäß weiteren beispielhaften Ausführungsformen. Die Bereiche R1, R2, R3 entsprechen den bereits vorstehend beispielhaft unter Bezugnahme auf Fig. 9 beschriebenen Bereichen R1, R2, R3.

Block B20 symbolisiert beispielhaft eine Reservierung von mit der wenigstens einen Infrastrukturkomponente IK-1 (zum Beispiel Stromspeicher) assoziierten Leistungsscheiben und/oder einer entsprechenden Energiemenge durch den Übertragungsnetzbetreiber NB, beispielsweise zu einem Tagesbeginn, beispielsweise in einem Zeitfenster zwischen etwa 0:00 Uhr und etwa 9:59 Uhr. Es versteht sich, dass die vorliegend beispielhaft gemachten Zeitangaben ausschließlich zur Illustration dienen und bei weiteren beispielhaften Ausführungsformen auch abweichend von dem vorliegend beispielhaft beschriebenen gewählt werden können, beispielsweise auch über Tagesgrenzen hinweg.

Block B21 symbolisiert beispielhaft eine Freigabe der Auktion, beispielsweise durch den Asset-Betreiber, z.B. Speicherbetreiber SB, beispielsweise in einem Zeitfenster zwischen etwa 10:00 Uhr und etwa 10:29 Uhr.

Block B22 symbolisiert beispielhaft eine Auktion, beispielsweise zur Verteilung restlicher freier Ressourcen (beispielsweise Leistungsscheiben und/oder Energiemenge) des Stromspeichers, beispielsweise für Marktteilnehmer MT, die beispielsweise in einem Zeitfenster zwischen etwa 10:30 Uhr und etwa 10:59 Uhr ausführbar ist. Block B22a symbolisiert beispielhaft eine Auktionsteilnahme durch den wenigstens einen Marktteilnehmer MT.

Block B23-1 symbolisiert beispielhaft das Einreichen von einem oder mehreren Einsatzplänen EP-1 (Fig. 6A) des Übertragungsnetzbetreibers, das beispielsweise in einem Zeitfenster zwischen etwa 13:00 Uhr und etwa 21:59 Uhr ausführbar ist.

Block B23-2 symbolisiert beispielhaft das Einreichen von einem oder mehreren Einsatzplänen EP-2 des Marktteilnehmers MT, das beispielsweise ebenfalls in einem Zeitfenster zwischen etwa 13:00 Uhr und etwa 21:59 Uhr (bei weiteren beispielhaften Ausführungsformen gegebenenfalls auch in einem von dem einreichen B23-1 abweichenden Zeitfenster) ausführbar ist.

Block B24 symbolisiert beispielhaft eine Konsolidierung und/oder Überprüfung der Einsatzpläne EP-1, EP2, beispielsweise durch den Asset-Betreiber, z.B. Speicherbetreiber SB, die beispielhaft in einem Zeitfenster zwischen etwa 22:00 Uhr und etwa 23:59 Uhr ausführbar ist.

Block B25 symbolisiert beispielhaft eine Erfassung von Daten, beispielsweise Betriebsdaten, der wenigstens einen Infrastrukturkomponente IK-1 (zum Beispiel Stromspeicher), beispielsweise während der Nutzung B25-1, B25-2 durch die Teilnehmer NB, MT.

Block B25-1 symbolisiert beispielhaft eine Speichernutzung, also Nutzung der reservierten Leistungsscheiben des Stromspeichers IK-1, durch den Übertragungsnetzbetreiber NB, beispielsweise gemäß dem zuvor eingereichten Einsatzplan, vgl. den Block B23-1, und Block B25-2 symbolisiert beispielhaft eine Speichernutzung, also Nutzung der bei der Auktion B22 ersteigerten Leistungsscheiben des Stromspeichers IK-1, durch den Marktteilnehmer MT, beispielsweise gemäß dem zuvor eingereichten Einsatzplan, vgl. den Block B23-2.

Block B26-1 symbolisiert beispielhaft ein optionales Reporting, also z.B. das Erstellen wenigstens eines Berichts REP-1 (Fig. 15) für den Übertragungsnetzbetreiber NB, wobei der wenigstens eine Bericht REP-1 beispielsweise auch eine Abrechnung aufweisen kann. Block B26-2 symbolisiert analog hierzu beispielhaft ein optionales Reporting, also z.B. das Erstellen wenigstens eines Berichts REP-2 (Fig. 15), für den Asset-Betreiber, z.B. Speicherbetreiber SB, wobei der wenigstens eine Bericht REP-2 beispielsweise auch eine Abrechnung aufweisen kann. Block B26-3 symbolisiert analog hierzu beispielhaft ein optionales Reporting, also z.B. das Erstellen wenigstens eines Berichts REP-3 (Fig. 15), für den wenigstens einen Marktteilnehmer MT, wobei der wenigstens eine Bericht REP-3 beispielsweise auch eine Abrechnung aufweisen kann.

Bei weiteren beispielhaften Ausführungsformen kann beispielsweise in wenigstens einem der nachfolgend genannten beispielhaften Blöcke gemäß Fig. 12 eine Speicherung zumindest eines Teils der bei dem Ablauf gemäß Fig. 12 verwendeten Daten in dem ersten Speichersystem SS1 und/oder in dem zweiten Speichersystem SS2 gemäß weiteren beispielhaften Ausführungsformen erfolgen: B20, B22, B23-1, B23-2, B24, B25.

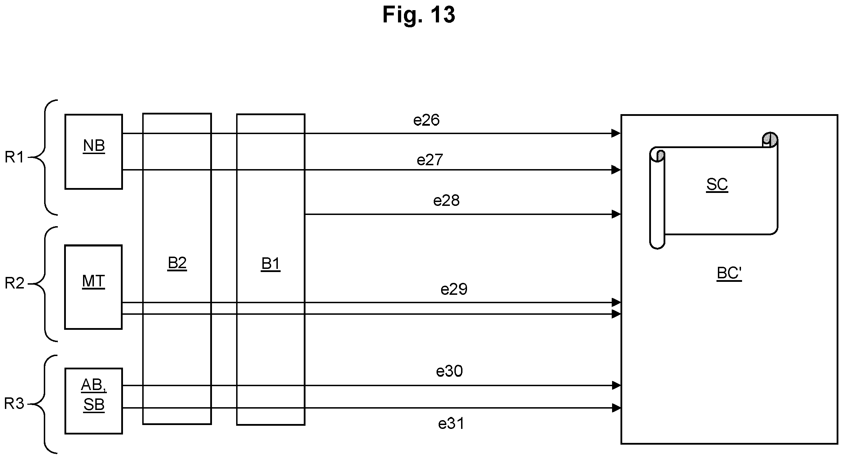

Fig. 13 zeigt schematisch ein vereinfachtes Ablaufdiagramm gemäß weiteren beispielhaften Ausführungsformen, das eine beispielhafte Nutzung des Smart Contract SC veranschaulicht, der beispielsweise in der mit dem zweiten Speichersystem SS2 assoziierten Blockchain BC' hinterlegt sein kann. Die Bereiche R1, R2, R3 gemäß Fig. 13 entsprechen den bereits vorstehend beispielhaft unter Bezugnahme auf Fig. 9 beschriebenen Bereichen R1, R2, R3.

Das Element e26 symbolisiert beispielhaft ein Schreiben von reservierten Ressourcen, beispielsweise Leistungsscheiben und/oder einer benötigten Energiemenge bezüglich der wenigstens einen Infrastrukturkomponente IK-1, beispielsweise zu einem Beginn einer Betriebsperiode, beispielsweise zu Tagesbeginn. Das Element e27 symbolisiert beispielhaft ein Schreiben eines Hashwerts des Einsatzplans E-1 des Übertragungsnetzbetreibers NB. Das Schreiben e26, e27 erfolgt beispielsweise in die Blockchain BC' bzw. in den damit assoziierten bzw. darin hinterlegten Smart Contract SC und ist bei weiteren beispielhaften Ausführungsformen durch den Übertragungsnetzbetreiber NB beispielsweise unter Verwendung der Vorrichtung 200 (Fig. 7) gemäß den Ausführungsformen ausführbar, beispielsweise unter Nutzung der beispielhaften Frontend-Einrichtung B2 und/oder der beispielhaften Backend-Einrichtung B1 (s- auch Fig. 9) und/oder direkt, also z.B. ohne Nutzung der beispielhaften Frontend-Einrichtung B2 und/oder der beispielhaften Backend-Einrichtung B1.

Das Element e28 symbolisiert beispielhaft ein Schreiben von dem Übertragungsnetzbetreiber NB und den Marktteilnehmer MT zugewiesenen Ressourcen, beispielsweise Leistungsscheiben und/oder Energiemenge, der wenigstens einen Infrastrukturkomponente IK-1, beispielsweise in die Blockchain BC' beziehungsweise in den Smart Contract SC.

Das Element e29 symbolisiert beispielhaft ein Schreiben der jeweiligen Einsatzpläne EP-2 Des wenigstens einen Marktteilnehmer MT, beispielsweise in die Blockchain BC' beziehungsweise in den Smart Contract SC.

Das Element e30 symbolisiert beispielhaft ein Schreiben der gesamten bzw. aggregierten Einsatzpläne EP-2 der Marktteilnehmer MT bzw. hieraus abgeleiteter Daten (z.B. Hashwert, z.B. gebildet mittels eines SHA-3 Verfahrens), beispielsweise in die Blockchain BC' beziehungsweise in den Smart Contract SC.

Das Element e31 symbolisiert beispielhaft ein Schreiben von Betriebsdaten, beispielsweise Messwerten bezüglich eines Betriebs der wenigstens einen Infrastrukturkomponente IK-1 (zum Beispiel Stromspeicher) in die Blockchain BC' beziehungsweise in den Smart Contract SC. Bei weiteren bevorzugten Ausführungsformen kann alternativ oder ergänzend zu dem Schreiben der Messwerte selbst beispielsweise auch ein jeweiliger basierend auf den Messwerten abgeleiteter Wert, z.B. Hashwert, in die Blockchain BC' beziehungsweise in den Smart Contract SC geschrieben werden.

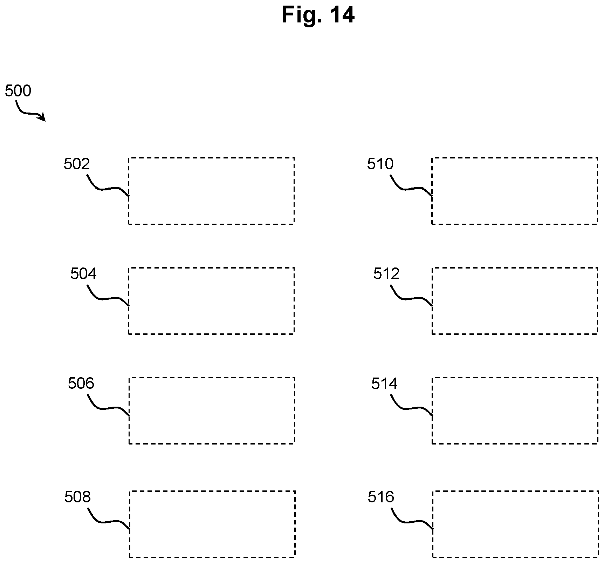

Weitere beispielhafte Ausführungsformen, Fig. 14, beziehen sich auf eine Verwendung 500 des Verfahrens gemäß den Ausführungsformen und/oder der Vorrichtung 200 gemäß den Ausführungsformen und/oder des computerlesbaren Speichermediums SM gemäß den Ausführungsformen und/oder des Computerprogramms PRG gemäß den Ausführungsformen und/oder des Datenträgersignals DCS gemäß den Ausführungsformen und/oder des Systems 1000 gemäß den Ausführungsformen und/oder des Netzes 10 gemäß den Ausführungsformen für wenigstens eines der folgenden Elemente: a) Verwalten 502 der mit der wenigstens einen Infrastrukturkomponente IK-1 assoziierten Daten D-IK-1, b) Dokumentieren 504 eines Zugriffs auf due bzw. einer Nutzung der wenigstens eine(n) Infrastrukturkomponente IK-1, c) Steigern 506 eines Nutzungsgrads der wenigstens einen Infrastrukturkomponente IK-1, d) Ermöglichen 508 einer parallelen bzw. gemeinsamen Nutzung B14-1, B14-2 (Fig. 9) der wenigstens einen Infrastrukturkomponente IK-1, beispielsweise durch wenigstens einen Betreiber NB eines bzw. des Netzes 10 und durch wenigstens einen Marktteilnehmer MT z.B. eines Strommarktes, e) Sicherstellen 510 einer regulatorischen Trennung zwischen einem Betrieb des Netzes 10 und einem mit dem Netz 10 assoziierten Strommarkt, f) Sicherstellen 512 einer Netzdienlichkeit der wenigstens einen Infrastrukturkomponente IK-1, beispielsweise führend gegenüber einer Marktdienlichkeit, g) Reservieren 514 bzw. Absichern von Kapazität der wenigstens einen Infrastrukturkomponente IK-1, h) Bewahren 516 einer Nachvollziehbarkeit der (Nutzung der) Kapazität der wenigstens einen Infrastrukturkomponente IK-1, beispielsweise für eine zwischen mehreren Parteien NB, MT geteilten Nutzung der wenigstens einen Infrastrukturkomponente IK-1, beispielsweise ohne eine, beispielsweise vollständige, Offenlegung von Nutzungsdaten bzw. Nutzungswerten bezüglich der wenigstens einen Infrastrukturkomponente IK-1.

Nachfolgend sind weitere beispielhafte Aspekte, Ausführungsformen und Vorteile beschrieben, die gemäß weiteren beispielhaften Ausführungsformen jeweils einzeln für sich oder in Kombination miteinander mit wenigstens einer der vorstehend beispielhaft beschriebenen Ausführungsformen kombinierbar sind.

Bei weiteren beispielhaften Ausführungsformen erfolgt eine Datenspeicherung bzw. Dateneinsicht z.B. von einer Planung und/oder einer tatsächlichen Nutzung der Leistungsscheiben/Kapazitäten bzw. sonstigen Ressourcen der wenigstens einen Infrastrukturkomponente IK-1, IK-2 (Fig. 2), beispielsweise zu vorgebbaren Zeitpunkten, mittels des ersten Speichersystems SS1 und/oder des zweiten Speichersystems SS2. Bei weiteren beispielhaften Ausführungsformen werden z.B. nicht alle Daten zu den Rollen ROL, der Planung, der Nutzung und der Messungen in einem öffentlichen Blockchain-Netzwerk bzw. einer öffentlichen Blockchain 14 abgespeichert. Es können bei weiteren beispielhaften Ausführungsformen beispielsweise alternativ zur Speicherung der Daten selbst (kryptographische) Hashwerte von in der Datenbank DB abgespeicherten Datenpunkten oder auch Datensätzen in der (z.B. öffentlichen) Blockchain 14 hinterlegt werden, die bei weiteren beispielhaften Ausführungsformen beispielsweise als Echtheitsnachweis für die in der (z.B. nicht öffentlichen Datenbank DB gespeicherten Daten) bzw. zur Absicherung dienen. Bei weiteren beispielhaften Ausführungsformen kann mit einem Hashwert aus der Blockchain 14 z.B. der dahinterliegende Datenpunkt oder Datensatz in der Datenbank DB nachvollzogen werden.

Bei weiteren beispielhaften Ausführungsformen werden Daten, beispielsweise die mit der Nutzung der wenigstens einen Infrastrukturkomponente IK-1 assoziierten Daten, jeweils für einen vorgebbaren Zeitraum, beispielsweise für einen Einsatztag, gespeichert.

Bei weiteren beispielhaften Ausführungsformen kann der Smart Contract SC (Fig. 5, 13) beispielsweise von einer externen Autorität bereitgestellt werden. Bei weiteren beispielhaften Ausführungsformen kann diese Autorität den Smart Contract z.B. initialisieren und/oder die Rollen ROL (Fig. 15) verwalten. Bei weiteren beispielhaften Ausführungsformen sind die beispielsweise gemäß weiteren beispielhaften Ausführungsformen in den Smart Contract SC geschriebenen Daten unveränderlich, d.h. sie können z.B. nur einmalig gesetzt und nicht überschrieben werden.

Bei weiteren beispielhaften Ausführungsformen kann die externe Autorität beispielsweise als "Contract Owner", also Inhaberin des Smart Contract SC gelten bzw. fungieren. Die externe Autorität kann bei weiteren beispielhaften Ausführungsformen in den Smart Contract SC z.B. initial erlaubte/bekannte Schlüssel bzw. Berechtigungen BER für die vorstehend beispielhaft beschriebenen Rollen ROL, NB, SB, MT hinterlegen.

Bei weiteren beispielhaften Ausführungsformen können zum Beispiel dann, wenn der Smart Contract SC auf die Blockchain BC bzw. ein mit der Blockchain BC assoziiertes Blockchain-Netzwerk "deployed" ("hochgeladen") wird, Accounts (Konten bzw. Nutzerkonten) zu den Rollen hinzugefügt und/oder entfernt werden. Bei weiteren beispielhaften Ausführungsformen können zum Beispiel auch weiterhin erlaubte Schlüssel bzw. Berechtigungen BER für Rollen ROL hinzugefügt werden. Bei weiteren beispielhaften Ausführungsformen können diese Abläufe zumindest teilweise auch in einem auch als Onboarding-Prozess P-OB (Fig. 15) bezeichenbaren Prozess vorgesehen sein, der bei weiteren beispielhaften Ausführungsformen beispielsweise dem vorstehend beispielhaft unter Bezugnahme auf Fig. 15 beschriebenen Betriebskonzept BK mit seinen z.B. fünf Prozessen PROC-1, PROC-2, ..., PROC-5 vorangestellt werden kann.

Bei weiteren beispielhaften Ausführungsformen kann der Onboarding-Prozess P-OB z.B. Identifikations- und/oder Verwaltungsprozesse enthalten. Weiteren beispielhaften Ausführungsformen können Rollen ROL beispielsweise über einen Identifikationsprozess P-ID (z.B. KYC, know your customer), beispielsweise mittels Unterstützung durch eine Dritt-Autorität ("KYC-Provider") in den Smart Contract SC bzw. in der Blockchain BC hinterlegt werden, beispielsweise durch Angabe kryptographischer Schlüssel bzw. Adressen, zum Beispiel von sog. Decenetralized Identifiers (DID) bzw. dezentralisierten Identitäten oder sogenannter "Self Sovereign Identities" (SSI).

Bei weiteren beispielhaften Ausführungsformen können wenigstens manche Teilnehmer TN, MT, NB, SB beispielsweise jeweils eine eigene Wallet mit Private Keys (z.B. privater Speicher zur Speicherung von beispielsweise geheimen kryptografischen Schlüsseln) besitzen und/oder verwalten, beispielsweise um zumindest manche, beispielsweise alle, Interaktionen mit der Blockchain BC, B4 und/oder mit der Vorrichtung 200 bzw. mit einer gemäß weiteren beispielhaften Ausführungsformen basierend auf dem Prinzip gemäß den Ausführungsformen bereitstellbaren Plattform B1, B2 (Fig. 8) zu signieren und/oder zu bestätigen, beispielsweise selbständig und zum Beispiel unabhängig von jeweils anderen Teilnehmern.

Nachfolgend sind weitere beispielhafte Aspekte, Ausführungsformen und Vorteile beschrieben, die gemäß weiteren beispielhaften Ausführungsformen jeweils einzeln für sich oder in Kombination miteinander mit wenigstens einer der vorstehend beispielhaft beschriebenen Ausführungsformen kombinierbar sind.

Aufgrund regulatorischer Restriktionen in manchen Staaten ist bei manchen konventionellen Ansätzen eine nachweisbare, manipulationssichere und transparente Trennung in der Nutzung von Kapazitäten beispielsweise einer netzdienlichen Infrastrukturkomponente durch mindestens einen unabhängigen Teilnehmer marktseitig nicht möglich. Zumindest manche nachteiligen Aspekte dieser konventionellen Ansätze sind unter Verwendung des Prinzips gemäß den Ausführungsformen zumindest zeitweise vermeidbar.

Bei weiteren beispielhaften Ausführungsformen kann ein Ablauf vorgesehen werden, um einen z.B. finanziellen und/oder materiellen Ausgleich zwischen den verschiedenen Parteien auszuführen, beispielsweise basierend auf den geplanten bzw. tatsächlich genutzten Kapazitäten eines (hybriden) Assets, wobei der Ausgleich beispielsweise basierend auf in den Reporten enthalten Informationen und/oder basierend auf in dem zweiten Speichersystem SS2 gespeicherten Informationen ausführbar ist.

Bei weiteren beispielhaften Ausführungsformen kann ein derartiger Ablauf für einen Ausgleich z.B. in einem vorgebbaren Zeitbereich vorgesehen sein, z.B. zwischen der Stunde 23:45-0.00 Uhr zu 0:00-0:15 Uhr, z.B. weil Kapazitäten sich verlagern, z.B. aufgrund eines bzw. des Auktions-/Reservierungsverfahrens. Bei weiteren beispielhaften Ausführungsformen hat z.B. der Übertragungsnetzbetreiber 600 MW Leistung und hat diese in einem Speicher gefüllt mit 600 MWh Kapazität, z.B. bis zum Tagesende. Bei weiteren beispielhaften Ausführungsformen hat der Übertragungsnetzbetreiber z.B. "nur" noch eine Leistung von z.B. 200 MW und benötigt z.B. nur 200 MWh Kapazität. Bei weiteren beispielhaften Ausführungsformen kann z.B. in solchen Situationen ein Übertrag der Energie z.B. auf den Markt um z.B. 400 MWh Kapazität ausgeführt werden, z.B. wenn die Marktteilnehmer in Summe die 400 MWh auch benötigen. Dadurch ist bei weiteren beispielhaften Ausführungsformen gleichsam ein Verkauf von Energie innerhalb des beispielhaft betrachteten Speichers realisierbar.

Bei weiteren beispielhaften Ausführungsformen ist die Kombination einer Verwendung des ersten Speichersystems SS1 mit einer Verwendung des zweiten Speichersystems SS2 vorteilhaft, beispielsweise um determiniert eine Soll/Ist-Echtheitsnachweis- und Differenzprüfung von beispielsweise gemessenen Ist-Kapazitätswerten zu vordefinierten Soll-Werten durchzuführen.

Bei weiteren beispielhaften Ausführungsformen wird durch das beispielhaft unter Bezugnahme u.a. auf Fig. 15 beschriebenen Betriebskonzept BK effizient ermöglicht, z.B. Soll/Ist Werte z.B. nacheinander netzseitig und marktseitig aus Plänen, Auktionen und physischen Messwerten einzubringen, wodurch bei weiteren beispielhaften Ausführungsformen ermöglicht wird, dass unabhängige Instanzen NB, MT unter Berücksichtigung von Identitäten und einem Interesse z.B. an Nichtoffenlegung sensibler Daten miteinander interagieren, was z.B. eine bessere Ausnutzung der betreffenden Infrastrukturkomponenten IK-1, IK-2 ermöglicht.

Bei weiteren beispielhaften Ausführungsformen wird eine strikte Trennung bei der Nutzung der wenigstens einen Infrastrukturkomponente IK-1, IK-2 zwischen verschiedenen Nutzungszwecken, beispielsweise zwischen Netz 10 und Markt, ermöglicht und somit bei weiteren beispielhaften Ausführungsformen eine Grundlage zur Lösung der mancherorts gegebenen regulatorischen Restriktionen bereitgestellt.

Bei weiteren beispielhaften Ausführungsformen ermöglicht eine eindeutige Abgrenzbarkeit der Nutzungen B14-1, B14-2 (Fig. 1) der wenigstens einen Infrastrukturkomponente IK-1, z.B. im Betrieb, eine Bereitstellung von neuen Investitions- bzw. Finanzierungsmodellen (→ "Sharing Economy"). Volkswirtschaftlich stellt dies bei weiteren beispielhaften Ausführungsformen eine optimierte Herangehensweise dar (z.B. im Interesse von Politik und Regulierung), und eröffnet zahlreiche neue Optionen für Betrieb und/oder Finanzierung, und kann damit beispielsweise auch eine Umsetzbarkeit (nicht nur) von Großprojekten fördern.

Bei weiteren beispielhaften Ausführungsformen ermöglicht die Verwendung einer DLT- Technologie, beispielsweise Blockchain, z.B. eine diskriminierungsfreie Zugänglichkeit und Einsehbarkeit der Rollenverteilungen und der damit verbundenen Berechtigungen, beispielsweise ohne das Erfordernis einer zentralen vertrauenswürdigen Instanz.

Bei weiteren beispielhaften Ausführungsformen können zumindest manche Prozesse wie beispielsweise Datenspeicherung und/oder - absicherung automatisiert beispielsweise unter Verwendung der Blockchain BC erfolgen, beispielsweise ohne Nutzung einer zentralen (vertrauenswürdigen) Instanz.

Die Verwendung einer Blockchain-basierten Speicherung mittels des zweiten Speichersystems SS2 gemäß weiteren beispielhaften Ausführungsformen ermöglicht ein hohes Maß an Transparenz und Nachvollziehbarkeit in der Nutzung der wenigstens einen Infrastrukturkomponenten und stellt so beispielsweise einen Austausch von Daten, Messwerten, Fahr- und Einsatzplänen zwischen den beteiligten Parteien NB, SB, MT, 3P sicher.

Bei weiteren beispielhaften Ausführungsformen weist die Messeinrichtung ME wenigstens ein geeichtes Messgerät auf. Bei weiteren beispielhaften Ausführungsformen werden die mittels der Messeinrichtung ME ermittelbaren Daten signiert, beispielsweise basierend auf einem der jeweiligen Messeinrichtung im IE zugeordneten Zertifikat bzw. typografischen Schlüssel. Bei weiteren beispielhaften Ausführungsformen können die auf diese Weise signierten Daten beispielsweise in dem zweiten Speichersystem SS2 gespeichert und damit beispielsweise (zum Beispiel gegenüber Manipulationen) abgesichert werden. Damit wird bei weiteren beispielhaften Ausführungsformen vorteilhaft eine Anzahl an möglichen Angriffspunkten und/oder unberechtigten Zugriffen auf die Daten verringert.

Bei weiteren beispielhaften Ausführungsformen ist wenigstens ein Programmcode des Smart Contract sind öffentlich einsehbar und kann damit beispielsweise durch unabhängige Dritte 3P (Fig. 11) verifiziert werden.

Bei weiteren beispielhaften Ausführungsformen ist bei einer Nutzung des Prinzips gemäß den Ausführungsformen ein, beispielsweise jederzeitiger, Nachweis wenigstens mancher, beispielsweise aller, Interaktionen zwischen den Beteiligten ermöglicht, wodurch beispielsweise eine Minimierung einer Marktbeeinflussung gewährleistet werden kann.

Bei weiteren beispielhaften Ausführungsformen kann das Prinzip gemäß den Ausführungsformen als Enabler ("Ermöglicher") für hybride Assets angesehen werden, der z.B. eine neue Dimension der Nutzung der Infrastrukturkomponenten beispielsweise für Übertragungsnetzbetreiber NB, Marktteilnehmer MT, Dritte 3P, Betreiber SB der Infrastrukturkomponenten und Regulatoren eröffnet.

Bei weiteren beispielhaften Ausführungsformen kann ein auf der DLT- bzw. Blockchain-Technologie basierendes Instrument bzw.

Verfahren der Tokenisierung verwendet werden, beispielsweise um innovative Sharing Konzepte gemäß weiteren beispielhaften Ausführungsformen umzusetzen.

Bei weiteren beispielhaften Ausführungsformen charakterisiert die Tokenisierung eine digitale Verbriefung und/oder Abbildung von Assets (z.B. im Sinne von Vermögensgegenständen bzw.

Erzeugnissen), Finanz-, Vermögenswerten aber auch Funktionalitäten und Rechten, wie z.B. Zugriffs- und Abstimmungsrechten.

Nachfolgend sind drei Beispiele A), B), C) gemäß weiteren beispielhaften Ausführungsformen genannt, bei der eine Tokenisierung im Kontext des Prinzips der Ausführungsformen verwendbar ist.

### A) Nutzungstoken

bei weiteren beispielhaften Ausführungsformen kann eine Tokenisierung einer Nutzung beispielsweise als Werkzeug verwendet werden, z.B. um eine tatsächliche Nutzung und damit verknüpfte Kosten und Aufwände transparent abzubilden. Vorstellbar ist dabei bei weiteren beispielhaften Ausführungsformen, dass betriebliche Daten in einem Nutzungstoken hinterlegt werden oder ein Nutzungstoken mit einem gekoppelten Zugriffsrecht zur Nutzung der Kapazitäten entwickelt wird. Dieser Nutzungstoken kann bei weiteren beispielhaften Ausführungsformen zudem mit Reporting-Mechanismen zum Beispiel innerhalb von Unternehmensprozessen verlinkt werden, um beispielsweise transparent nachvollziehen zu können, zu welchem Zeitpunkt in welcher Hemisphäre der Betrieb bzw. die Nutzung stattfindet und welche Kosten dabei entstehen. Die Tokenisierung der Nutzung gemäß weiterer beispielhafter Ausführungsformen sorgt damit für Transparenz und Nachvollziehbarkeit der strikten Trennung zwischen Netz und Markt.

Bei weiteren beispielhaften Ausführungsformen kann eine Entwicklung von Tokens mit verknüpften Zugriffsrechten zudem einen Markt entstehen lassen, bei dem nicht nur Marktteilnehmer, sondern auch Intermediäre das Recht auf Kapazitäten verauktionieren und anschließend zum Beispiel auf dem Strommarkt vertreiben können, beispielsweise ohne direkt die Kapazitäten zu beziehen. Beispielsweise kann gemäß weiteren beispielhaften Ausführungsformen elektrischer Strom tokenisiert werden und z.B. in Form dieser Tokens weiter veräußerbar.

### B) Eigentumstoken

Neben der Abbildung von Betriebs- und Nutzungsdaten sowie Nutzungs-/Zugriffsrechten in einem Token gemäß beispielhaften Ausführungsformen sind bei weiteren beispielhaften Ausführungsformen auch Abbildungen von Eigentumsrechten und/oder Vermögensansprüchen mittels Tokens möglich. In einem Token können damit beispielsweise Eigentumsanteile digital verbrieft werden. Bei weiteren beispielhaften Ausführungsformen besitzt ein Halter dieser Tokens dann z.B. einen Teil des Assets.

### C) Finanzierungstoken

bei weiteren beispielhaften Ausführungsformen repräsentiert ein Finanzierungstoken eine digitale Verbriefung eines Finanzproduktes, z.B. in Form von Token zur Investition/Finanzierung z.B. des hybriden Assets. Es können dadurch bei weiteren beispielhaften Ausführungsformen einerseits am Kapitalmarkt handelbare Finanzprodukte effizienter verbrieft, emittiert und gehandelt werden. Andererseits ermöglicht es die Tokenisierung als Vehikel gemäß weiteren beispielhaften Ausführungsformen, bisher nicht am Kapitalmarkt handelbare Produkte zu verbriefen und zu emittieren. Dies ermöglicht bei weiteren beispielhaften Ausführungsformen beispielsweise eine Investierbarkeit in bisher illiquide Anlageklassen.

Bei weiteren beispielhaften Ausführungsformen kann beispielsweise durch eine kleine Stückelung bei der Gestaltung von Finanzierungstoken eine Mindestinvestition in ein solches Finanzprodukt signifikant gesenkt werden, wodurch auch neue Anlegerklassen adressiert werden. Privatanleger haben z.B. die Chance, in solche Produkte und Projekte zu investieren, welches die volkswirtschaftliche Effizienz unterstützt.

Zudem ermöglicht die Tokenisierung eines hybriden Assets gemäß weiteren beispielhaften Ausführungsformen eine Verknüpfung zwischen der Betriebsmittelnutzung und -finanzierung.

Bei weiteren beispielhaften Ausführungsformen kann beispielsweise durch eine in der Blockchain BC nachvollziehbare transparente Nutzung eine z.B. automatisierte nutzungsbasierte Renditegestaltung umgesetzt werden. Auch hier werden Effizienzvorteile in einem automatisierten Ausschüttungsmechanismus angenommen. Für Anleger kann ein solches Anlageprodukt eine interessante Investitionsmöglichkeit darstellen.

## Patentansprüche

1. Verfahren, beispielsweise computerimplementiertes Verfahren, zum Verwalten von Daten (D-IK-1), die mit wenigstens einer Infrastrukturkomponente (IK-1) für ein Netz (10) zur Übertragung und/oder Verteilung von elektrischer Energie assoziiert sind, aufweisend: Speichern (100) der mit der wenigstens einen Infrastrukturkomponente (IK-1) assoziierten Daten (D-IK-1) in einem ersten Speichersystem (SS1), Speichern (104) a) wenigstens eines Teils (D1-IK-1) der mit der wenigstens einen Infrastrukturkomponente (IK-1) assoziierten Daten (D-IK-1) und/oder b) von basierend auf den mit der wenigstens einen Infrastrukturkomponente (IK-1) assoziierten Daten (D-IK-1) abgeleiteten Daten (D2-IK-1) in einem zweiten Speichersystem (SS2), wobei das zweite Speichersystem (SS2) auf einer Distributed-Ledger-Technologie, DLT, basiert.

2. Verfahren nach Anspruch 1, wobei das erste Speichersystem (SS1) eine Datenbank (DB) aufweist, beispielsweise eine private bzw. nicht öffentlich zugängliche Datenbank.

3. Verfahren nach wenigstens einem der vorstehenden Ansprüche, wobei das zweite Speichersystem (SS2) wenigstens eines der folgenden Elemente aufweist: a) Blockchain (BC), b) gerichteter azyklischer Graph (DAG), beispielsweise blockbasierter gerichteter azyklischer Graph oder transaktionsbasierter gerichteter azyklischer Graph.

4. Verfahren nach wenigstens einem der vorstehenden Ansprüche, wobei die wenigstens eine Infrastrukturkomponente (IK-1) wenigstens eines der folgenden Elemente aufweist: a) Kraftwerk, beispielsweise Kraftwerk zur Abdeckung von Spitzenlasten, b) Stromspeicher bzw. Speicher für arbeitsfähige elektrische Ladung, c) sonstige Komponente, die dazu ausgebildet ist, zumindest zeitweise Wirkleistung abzugeben, d) Betriebsmittel für das Netz (10).

5. Verfahren nach wenigstens einem der vorstehenden Ansprüche, wobei das Netz (10) zur Übertragung und/oder Verteilung der elektrischen Energie wenigstens eines der folgenden Elemente aufweist: a) Transportnetz bzw. Übertragungsnetz, b) Verteilnetz, c) Stadtnetz, d) Werksnetz, e) Höchstspannungsnetz, f) Hochspannungsnetz, g) Mittelspannungsnetz, h) Niederspannungsnetz.

6. Verfahren nach wenigstens einem der vorstehenden Ansprüche, aufweisend: Bilden (102) der abgeleiteten Daten (D2-IK-1) mittels einer kryptografischen Funktion und/oder einer Hashfunktion, beispielsweise einer kryptografischen Hashfunktion (HF), beispielsweise vom Typ SHA-2 oder SHA-3.

7. Verfahren nach wenigstens einem der vorstehenden Ansprüche, wobei die mit der wenigstens einen Infrastrukturkomponente (IK-1) assoziierten Daten (D-IK-1) wenigstens eines der folgenden Elemente aufweisen: a) Betriebsdaten (BD-IK-1) der wenigstens einen Infrastrukturkomponente (IK-1), beispielsweise aufweisend eine Leistung und/oder eine Kapazität der wenigstens einen Infrastrukturkomponente (IK-1), b) erste Reservierungsdaten (RD1-IK-1), die eine Reservierung der wenigstens einen Infrastrukturkomponente (IK-1), beispielsweise bezüglich eines ersten Nutzungszwecks, beispielsweise einer Netzdienlichkeit, charakterisieren, c) zweite Reservierungsdaten (RD2-IK-1), die eine Reservierung der wenigstens einen Infrastrukturkomponente (IK-1), beispielsweise bezüglich eines zweiten Nutzungszwecks, der z.B. von dem ersten Nutzungszweck verschieden ist, beispielsweise einer Marktdienlichkeit, charakterisieren, d) Einsatzpläne (EP-IK-1; EP-1, EP-2), die beispielsweise einen zukünftigen Einsatz der wenigstens einen Infrastrukturkomponente (IK-1), beispielsweise für einen ersten Nutzungszweck und/oder einen zweiten Nutzungszweck, charakterisieren.

8. Verfahren nach wenigstens einem der vorstehenden Ansprüche, aufweisend wenigstens eines der folgenden Elemente: a) Lesen (110) von Daten (D) aus dem ersten Speichersystem (SS1) und/oder dem zweiten Speichersystem (SS2), b) Bereitstellen (112) von Daten bzw. der Daten (D) bzw. von aus den Daten (D) abgeleiteten Daten (D').

9. Verfahren nach wenigstens einem der vorstehenden Ansprüche, aufweisend: Bereitstellen (115) einer, beispielsweise grafischen, Benutzeroberfläche (GUI), beispielsweise zur Ausgabe (115a) der mit der wenigstens einen Infrastrukturkomponente (IK-1) assoziierten Daten (D-IK-1) und/oder der basierend auf den mit der wenigstens einen Infrastrukturkomponente (IK-1) assoziierten Daten (D-IK-1) abgeleiteten Daten (D2-IK-1) und/oder zur Eingabe (115b) von Daten.

10. Verfahren nach wenigstens einem der vorstehenden Ansprüche, aufweisend wenigstens eines der folgenden Elemente: a) Bereitstellen (120) eines Smart Contract (SC), b) Verwenden (122) eines bzw. des Smart Contract (SC), c) Verwalten (124) von Berechtigungen (BER), beispielsweise basierend auf dem Smart Contract (SC), wobei die Berechtigungen beispielsweise charakterisieren, ob eine Partei bzw. ein Nutzer Daten in den Smart Contract (SC) schreiben darf und/oder ob einer Partei bzw. ein Nutzer mit dem Smart Contract (SC) assoziierte Daten in das zweite Speichersystem (SS2) schreiben darf, und/oder wobei die Berechtigungen beispielsweise charakterisieren, welcher Nutzer in welcher Rolle bzw. in welchen Rollen und/oder mit welchem Konto bzw. welchen Konten mit einer Benutzeroberfläche und/oder dem Smart Contract (SC) und/oder dem zweiten Speichersystem (SS2) interagieren darf, d) Verwalten (126) von Rollen (ROL), beispielsweise basierend auf dem Smart Contract (SC).

11. Verfahren nach Anspruch 10, weiter aufweisend: Zuordnen (128) eines Key-Value-Speichers (KV) zu dem Smart Contract (SC).

12. Verfahren nach wenigstens einem der Ansprüche 7 bis 11, aufweisend wenigstens eines der folgenden Elemente: a) Empfangen (130, e20) der Betriebsdaten (BD-IK-1) der wenigstens einen Infrastrukturkomponente (IK-1), beispielsweise von einer der wenigstens einen Infrastrukturkomponente (IK-1) zugeordneten Messeinrichtung (ME), b) Empfangen (132) der ersten Reservierungsdaten (RD1-IK-1), c) Empfangen (134) der zweiten Reservierungsdaten (RD2-IK-1), d) Empfangen (136) der Einsatzpläne (EP-IK-1; EP-1, EP-2).

13. Verfahren nach wenigstens einem der vorstehenden Ansprüche, weiter aufweisend: Empfangen (140) von Eingangsdaten (ED) von wenigstens einer weiteren Einheit (ME, 300, NB, MT), Ermitteln (142) in welchem Speichersystem (SS1, SS2) die Eingangsdaten (ED) und/oder von den Eingangsdaten (ED) ableitbare Daten (ED') gespeichert werden sollen, Speichern (144) der Eingangsdaten (ED) und/oder von den Eingangsdaten (ED) ableitbare Daten (ED') basierend auf der Ermittlung (142) .

14. Vorrichtung (200) zur Ausführung des Verfahrens nach wenigstens einem der vorstehenden Ansprüche.

15. Vorrichtung (200) nach Anspruch 14, wobei die Vorrichtung (200) wenigstens eine Recheneinrichtung (202) und eine der Recheneinrichtung (202) zugeordnete Speichereinrichtung (204) zur zumindest zeitweisen Speicherung von Daten (DAT) und/oder Computerprogrammen (PRG) aufweist, und wenigstens eine Datenschnittstelle (206) zum Datenaustausch mit wenigstens einer weiteren Einheit (300).

16. System (1000) aufweisend wenigstens eine Vorrichtung (200) nach wenigstens einem der Ansprüche 14 bis 15 und wenigstens eine Infrastrukturkomponente (IK-1, IK-2) für ein Netz (10) zur Übertragung und/oder Verteilung von elektrischer Energie.

17. Verwendung (500) des Verfahrens nach wenigstens einem der Ansprüche 1 bis 13 und/oder der Vorrichtung (200) nach wenigstens einem der Ansprüche 14 bis 15 und/oder des Systems (1000) nach Anspruch 16 für wenigstens eines der folgenden Elemente: a) Verwalten (502) der mit der wenigstens einen Infrastrukturkomponente (IK-1) assoziierten Daten (D), b) Dokumentieren (504) eines Zugriffs auf die wenigstens eine Infrastrukturkomponente (IK-1), c) Steigern (506) eines Nutzungsgrads der wenigstens einen Infrastrukturkomponente (IK-1), d) Ermöglichen (508) einer parallelen bzw. gemeinsamen Nutzung der wenigstens einen Infrastrukturkomponente (IK-1), beispielsweise durch wenigstens einen Betreiber eines bzw. des Netzes (10) und durch wenigstens einen Marktteilnehmer eines Strommarktes, e) Sicherstellen (510) einer regulatorischen Trennung zwischen einem Betrieb des Netzes (10) und einem mit dem Netz (10) assoziierten Strommarkt, f) Sicherstellen (512) einer Netzdienlichkeit der wenigstens einen Infrastrukturkomponente (IK-1), beispielsweise führend gegenüber einer Marktdienlichkeit, g) Reservieren bzw. Absichern (514) von Kapazität der wenigstens einen Infrastrukturkomponente (IK-1), h) Bewahren (516) einer Nachvollziehbarkeit der Kapazität der wenigstens einen Infrastrukturkomponente (IK-1), beispielsweise für eine zwischen mehreren Parteien geteilten Nutzung der wenigstens einen Infrastrukturkomponente (IK-1), beispielsweise ohne eine, beispielsweise vollständige, Offenlegung von Nutzungsdaten bzw. Nutzungswerten bezüglich der wenigstens einen Infrastrukturkomponente (IK-1).
